# EUROPEAN PATENT APPLICATION

(11) **EP 4 000 395 A1**
(43) Date of publication of application: **25.05.2022**
(21) Application number: 20290078.3
(22) Date of filing: 19.11.2020
(51) Int. Cl.: A01M 1/20

(54) **DEVICE AND METHOD TO DISTRIBUTE AIR TREATMENT SUBSTANCE**

(71) Applicant: Bayer S.A.S., 69009 Lyon (FR)
(72) Inventor: The designation of the inventor has not yet been filed
(74) Representative: BIP Patents

(57) **Abstract**

Disclosed herein is a device and a method to disperse at least one air treatment substance, a kit containing the device, and use of the device to repel and/or kill a pest in an indoor or outdoor area.

## Description

### FIELD

The present invention relates to a device and method for distributing at least one air treatment substance, a kit comprising the device, and use of the device to repel and/or kill a pest in an indoor or outdoor area.

### BACKGROUND

Mosquitos and vector borne diseases are an issue worldwide. A variety of devices have been developed for dispensing air treatment substances, such as insecticides or insect repellants, to combat mosquitos. Some of these devices mix the air treatment substance with candle wax, such that the air treatment substance is released when the candle is burning. However, the heat of the flame can degrade many air treatment substances and/or cause them to be released too quickly and inefficiently when mixed directly into the candle wax. In addition, many existing devices are designed for indoor use and would not be effective in larger spaces or outdoor areas.

Thus, a current unmet need exists for a lower cost and easy-to-use air treatment device for releasing air treatment substances, such as insecticides or repellants, that provides a relatively prolonged useful life and/or is effective at treating a larger area or space, such as an outdoor area, with an air treatment substance for combatting insects.

### SUMMARY

Provided herein is a device for dispensing at least one air treatment substance comprising a heat source, a composition comprising the air treatment substance, and a top section, wherein the device is configured to receive the heat source and the composition such that the heat source can apply heat to the composition, and wherein the top section is situated to block or inhibit a vertical flow of the at least one air treatment substance when the composition is heated.

Also provided herein is a device for dispensing at least one air treatment substance comprising a top portion (1) and a housing (3), wherein the housing (3) comprises:
a base (11), and at least one side portion (12),
wherein the at least one side portion (12) is disposed between the base (11) and the top portion (1), and wherein the device has an interior space that is at least partially enclosed by the housing (3);
wherein the housing (3) is configured to receive a heat source (2) on or above a top surface of the base (11) of the housing;
wherein the device further comprises a holder (7) that is configured to receive a composition comprising at least one air treatment substance (4b); and
wherein the device is further configured to receive the heat source (2) and the composition (4b) such that the heat source (2) can apply heat to the composition (4b).

Also provided herein is device for dispensing at least one air treatment substance comprising a top portion (1) and a housing (3), wherein the housing (3) comprises at least one side portion (12),
wherein the at least one side portion (12) is disposed between an exterior surface and the top portion (1) when the device is placed on the exterior surface, and wherein the device has an interior space that is at least partially enclosed by the housing (3);
wherein the device further comprises a holder (7) that is configured to receive a composition comprising at least one air treatment substance (4b); and
wherein the device is further configured to receive the composition (4b) such that a heat source (2) placed on the exterior surface can apply heat to the composition (4b).

In an embodiment, the top portion (1) is fixed or removable from the housing (3). In an embodiment, the top portion (1) is situated to block or inhibit a vertical flow of the at least one air treatment substance from the composition (4b) received by the holder (7) when the composition (4b) is heated.

In an embodiment, the device further comprises at least one side opening (5) in the top portion (1) and/or the at least one side portions (12) that allows or directs a lateral or horizontal flow of the at least one air treatment substance through the at least one side opening (5).

In an embodiment, the holder (7) is located between the top portion (1) and the base of the housing (11) or exterior surface. In an embodiment, the holder (7) comprises an aperture or recess (21) shaped to receive and hold a pod (4) comprising a container (4a) and the composition disposed in the container (4b).

In an embodiment, the device further comprises a second holder (13) configured to receive the heat source (2). In an embodiment, the second holder (13) is located between the first holder (7) and the base (11) or above the exterior surface.

In an embodiment, the device is configured to receive the heat source (2) and the composition (4b) such that the heat source (2) applies a sufficient amount of heat to the composition (4b) to produce a desired release rate of the air treatment substance.

In an embodiment, the device further comprises the heat source (2). In an embodiment, the heat source (2) comprises a candle with optionally at least one additive disposed in a container comprising 100-150g wax. In an embodiment, the heat source (2) can heat the composition comprising at least one air treatment substance to a temperature of about 140-220°C.

In an embodiment, the holder (7) holds the pod (4) comprising the container (4a) and the composition disposed in the container (4b). In an embodiment, the composition (4b) comprises the at least one air treatment substance, a matrix, and optionally at least one additive. In an embodiment, the matrix comprises an inert solid substance, and wherein the matrix is optionally immiscible with the at least one air treatment substance which partially or fully melts above 50°C.

In an embodiment, the matrix is wax. In an embodiment, the at least one air treatment substance is at a concentration of about 0.03-20%, wherein such percentage is defined as the amount or mass of the air treatment substance divided by the amount or mass of the matrix. In an embodiment, the at least one air treatment substance is selected from the group consisting of volatile pest control active ingredient, fragrance, natural essential oil, deodorizer, allergen control ingredient, disinfectant, and sanitizer.

In an embodiment, the at least one air treatment substance is selected from the group consisting of dimefluthrin, profluthrin, transfluthrin, furamethrin, metofluthrin, allethrin, prallethrin, phenothrin, permethrin, meperfluthrin, momfluorothrin, flumethrin, imiprothrin, and tetramethrin, or combination thereof.

In an embodiment, the composition (4b) comprises about 10mg -1g of the air treatment substance and about 5g-25g of the wax.

In an embodiment, the device further comprises a fan (10), wherein the fan (10) increases the amount of the at least one air treatment substance to flow through the at least one side opening (5) of the device.

Also provided herein is use of the device discussed herein to repel and/or kill a pest in an indoor or outdoor area.

Also provided herein is a method for releasing at least one air treatment substance comprising:
(a) placing a heat source in an interior space of a device, the device comprising a top portion and a housing, wherein the housing comprises at least one side portion, wherein the at least one side portion is disposed between the top portion and a base or external surface when the device is placed upright on the exterior surface, wherein the interior space of the device is at least partially enclosed by the housing, wherein the device further comprises a holder that is configured to receive a composition comprising the at least one air treatment substance, and wherein the device is further configured to receive the heat source and the composition such that the heat source can apply heat to the composition;
(b) placing a pod in the holder of the device, the pod comprising a pod container and a composition disposed in the container, wherein the composition comprises the at least one air treatment substance; and
(c) heating the composition comprising a matrix and the at least one air treatment substance with heat from the heat source to cause a release of the at least one air treatment substance into the surrounding air.

### BRIEF DESCRIPTION OF THE DRAWINGS

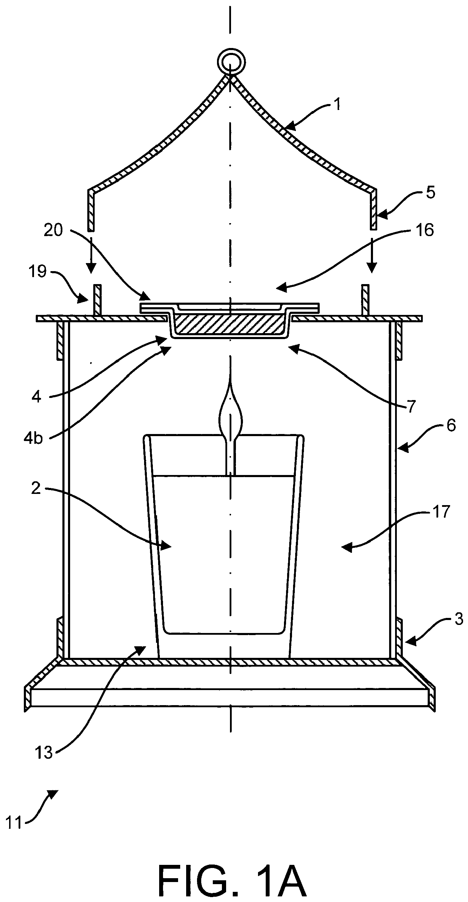

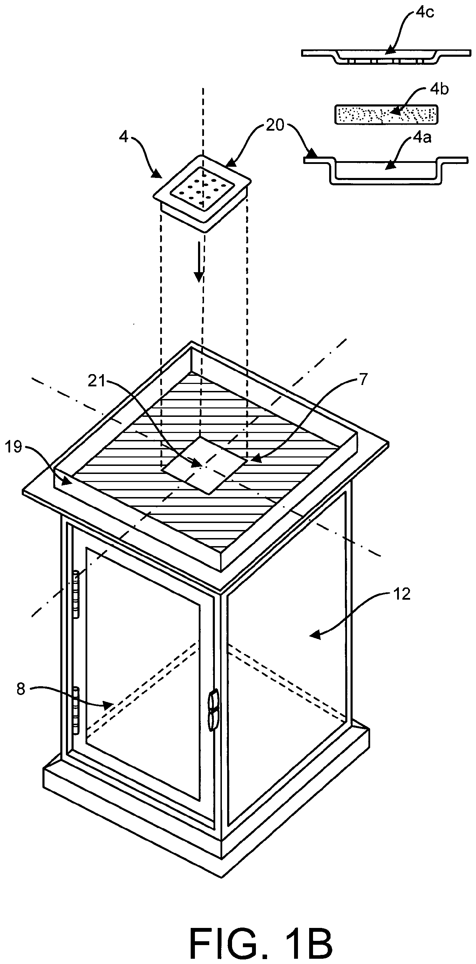

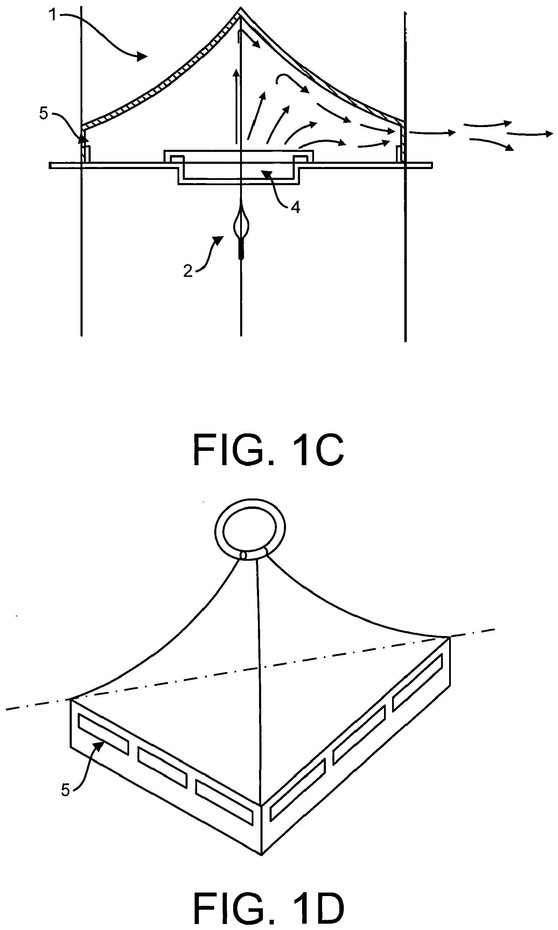

FIG. 1 shows different views of a present embodiment of a lantern-like device for dispensing at least one air treatment substance. FIG. 1A is a simplified cross-section view comprising a frame or housing for receiving a candle heat source, a holder for receiving a pod comprising the at least one air treatment substance, and a top portion or lid with side opening(s)/ vent(s) for controlling the flow of the air treatment substance to the surroundings. FIG. 1B is a different view of the device comprising the frame or housing and a pod positioned in a holder connected to the frame or housing. FIG. 1C is a simplified cross-section view of the top portion or lid and a top part of the frame or housing of the device showing the position of the top portion or lid relative to the frame or housing when placed on top of the frame or housing in a closed position to redirect the flow of the air treatment substance through side opening(s) or vent(s) in the side of the top portion or lid. FIG. 1D is a top view of the lid or top portion of the device showing multiple side openings or vents in the lid or top portion.

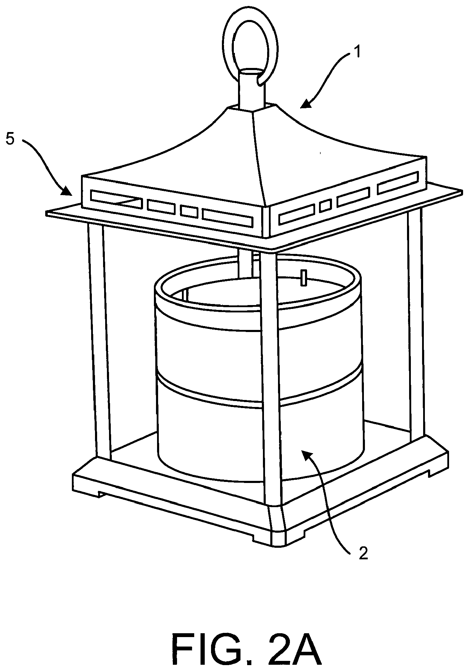

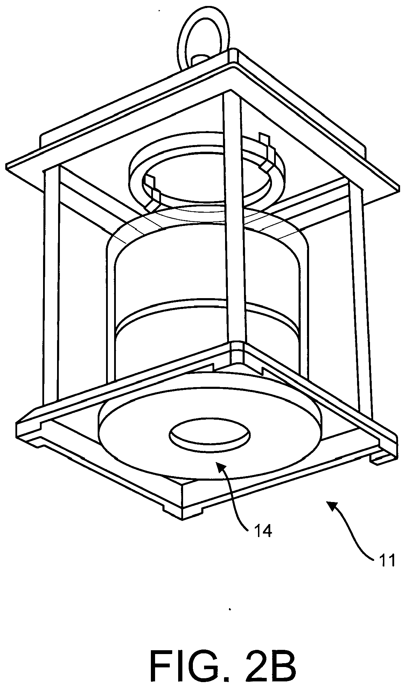

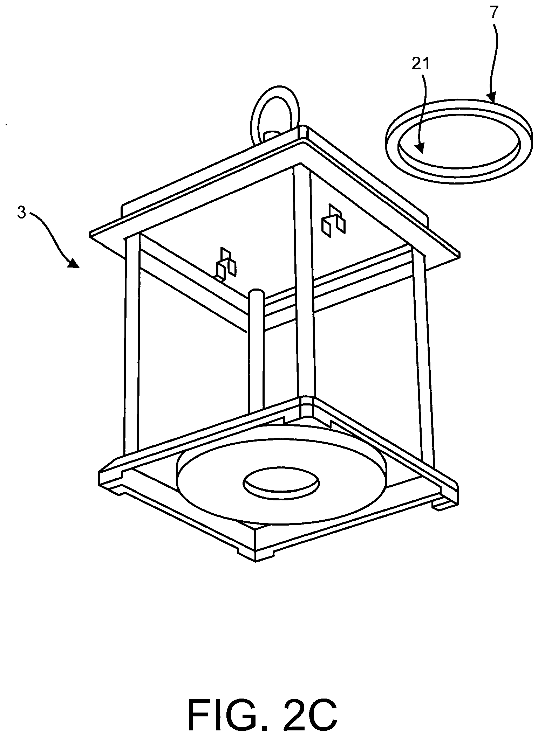

FIG. 2 is a collection of different views of another embodiment of a device for dispensing at least one air treatment substance having a holder for receiving a pod containing a composition with an air treatment substance where the holder is attached to the top portion or lid of the device. FIG. 2A is a perspective view of the lantern device with a candle heat source and top portion/ lid in a closed position with side opening(s)/ vent(s). FIG. 2B is a bottom view of the lantern device showing that a top surface of the base of the housing comprises a recess shaped to receive the candle heat source. FIG. 2C is an expanded view of the lantern device showing the holder.

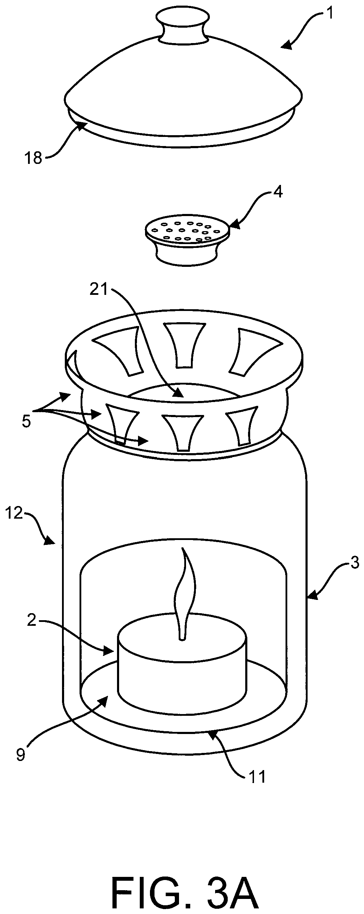

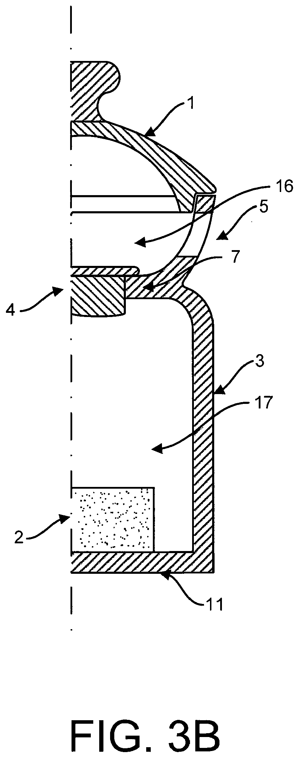

FIG. 3 shows different views for another embodiment of a device for dispensing at least one air treatment substance. FIG. 3A is a perspective view of a device having a round/cylindrical frame or housing and an open area for access to the interior of the device for removal or placement of a candle heat source, the device being further configured to receive a pod in a top opening or hole in the frame or housing of the device and a lid resting on an upper outer rim or edge portion of the frame or housing of the device, with vents or openings in the side(s) of the frame or housing above the placement for the pod. FIG. 3B is a cross-sectional view of half of the device in FIG. 3A.

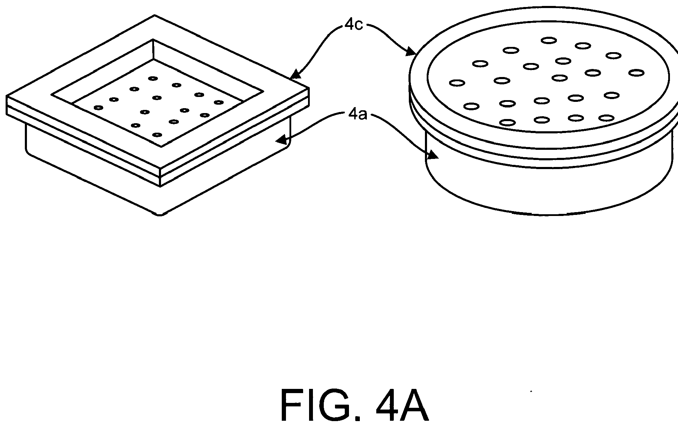

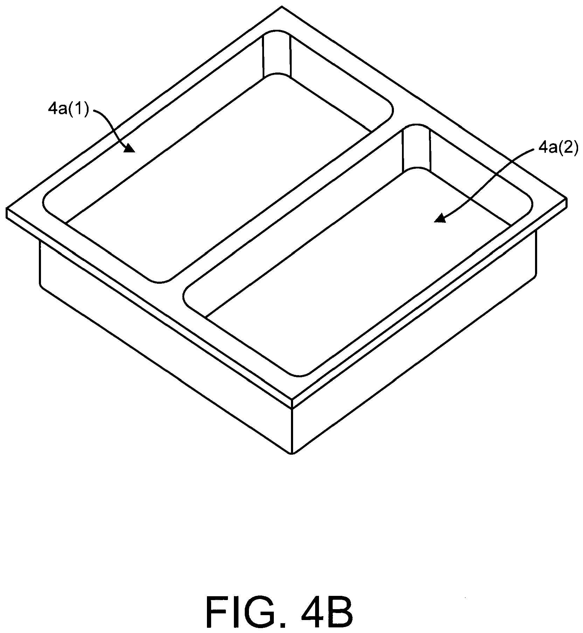

FIG. 4 shows different shapes and configurations for the pod/pod container. FIG. 4A shows different possible shapes (i.e., round, square) for the pod/ pod container. FIG. 4B shows a pod container having multiple compartments (double compartment) with subpart 1 and subpart 2.

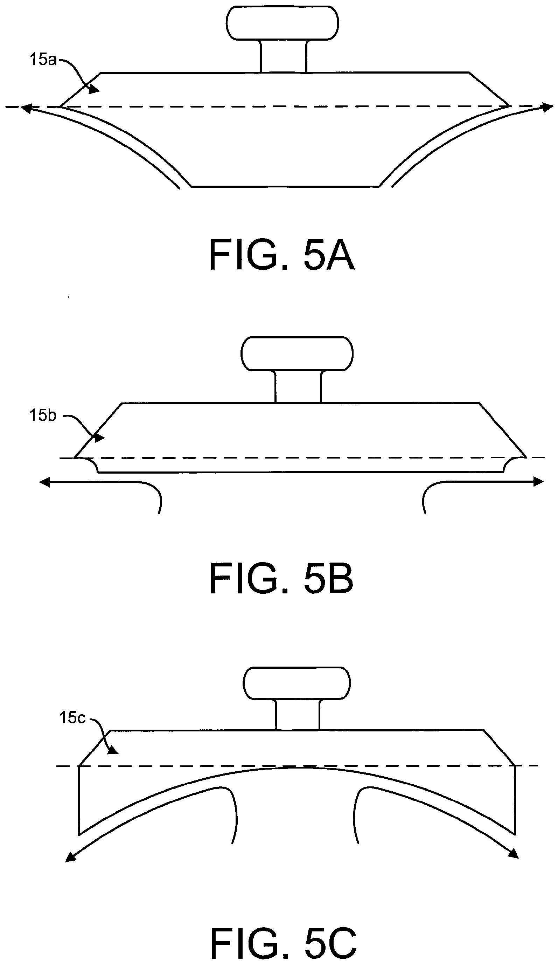

FIG. 5 shows different potential top portion/ lid designs. The lids all prevent vertical flow of the air treatment substance plume, but different designs can help guide the plume in different lateral or horizontal directions. FIG. 5A shows a convex shape for the top portion/ lid where the at least one air treatment substance plume go lateral and up. FIG. 5B shows a flat shape for the top portion/ lid where the at least one air treatment substance plume go horizontally lateral. FIG. 5C shows a concave shape for the top portion/lid where the at least one air treatment substance plume go lateral and down. The lid shape depends on intrinsic properties, and the objective is always to redirect the plume to the area to be protected.

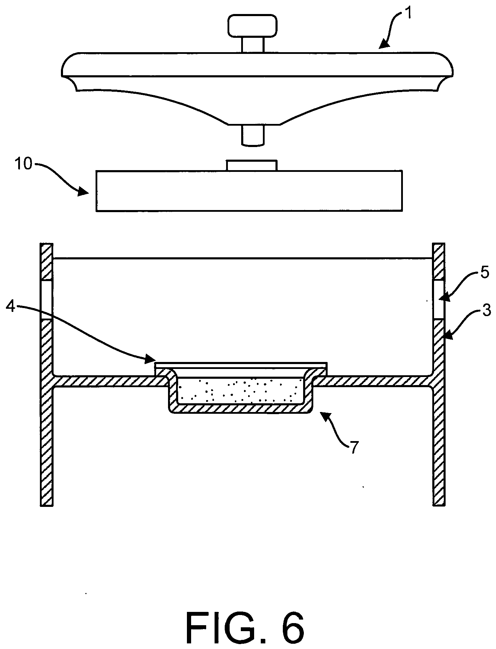

FIG. 6 shows a break down view of a device with a fan to further help with guidance of the at least one air treatment substance plume, wherein the fan can be electrically powered or simply using the flame heat to turn, and insertion of the fan increases air treatment substance plume velocity/ coverage area. The fan is shown as inserted between the top portion/ lid and frame or housing comprising a holder for receiving a pod comprising the at least one air treatment substance.

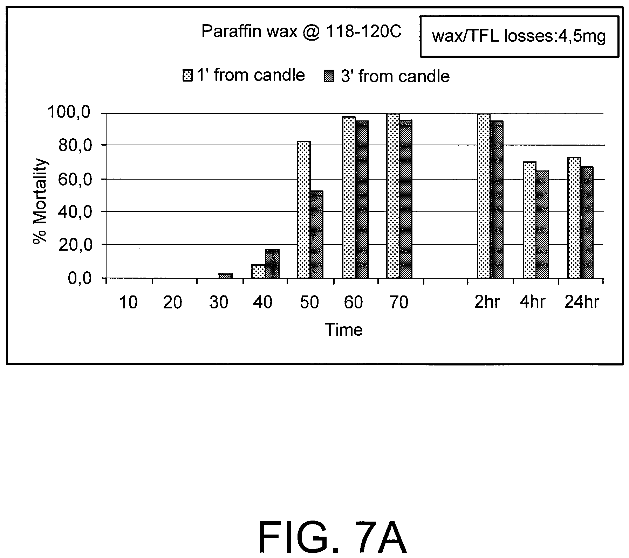

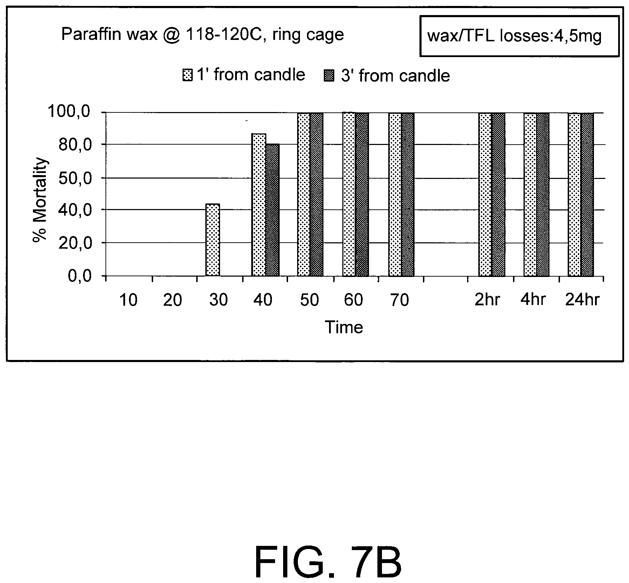

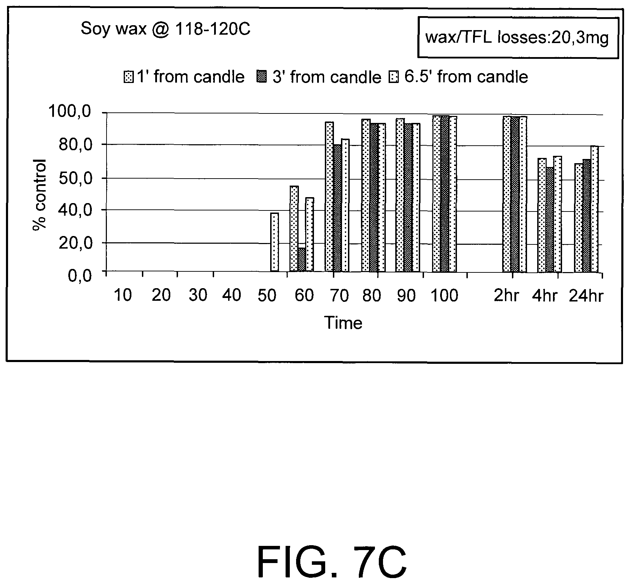

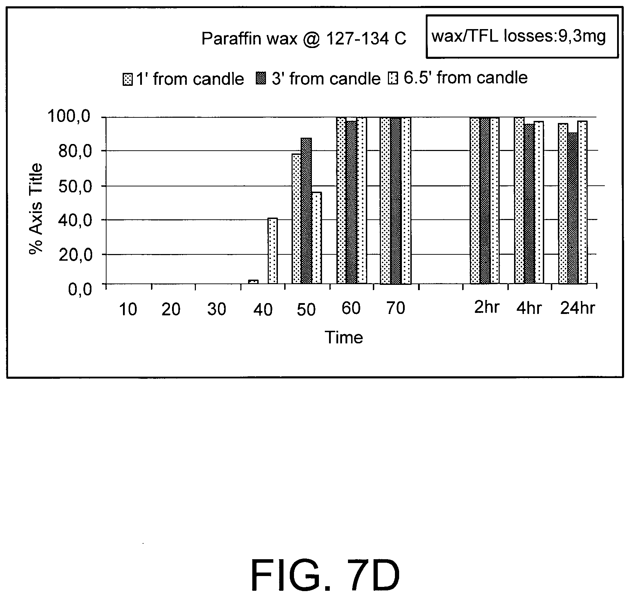

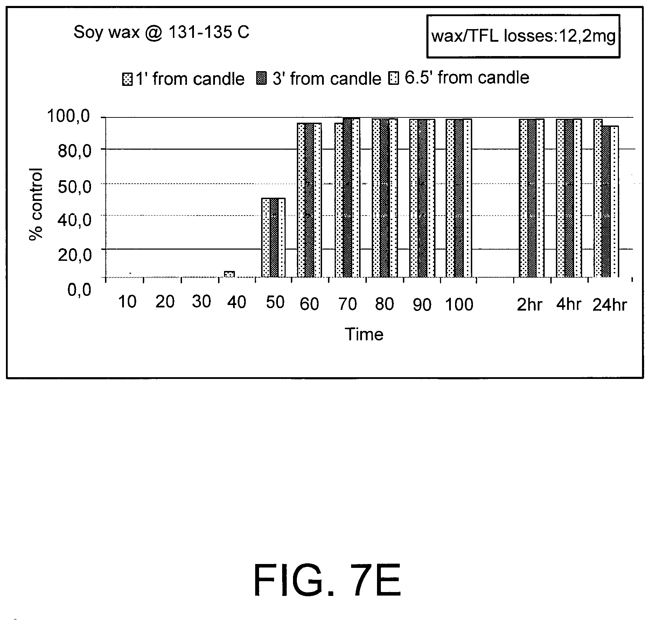

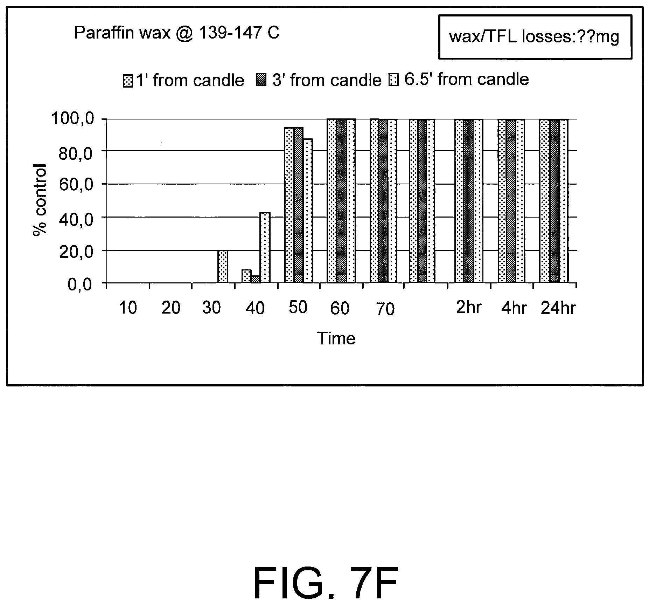

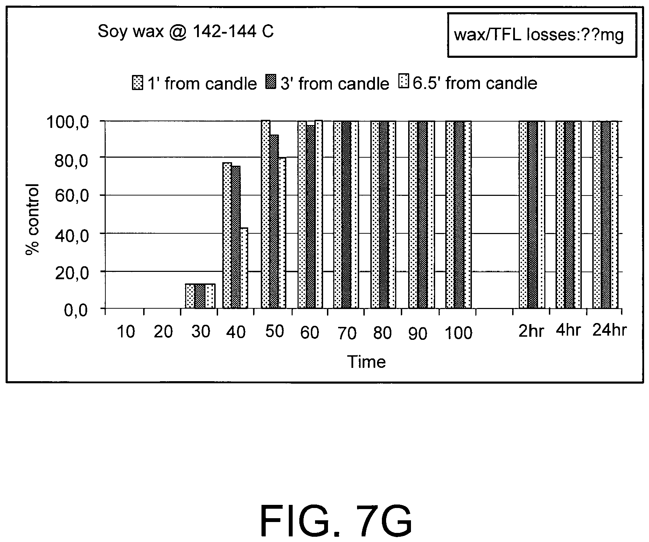

FIG. 7 shows graphs demonstrating indoor efficacy testing of pods containing a composition comprising TFL and wax heated by a hot plate. The graphs show good efficacy for heating pods containing TFL and wax to 118° to 147°C.

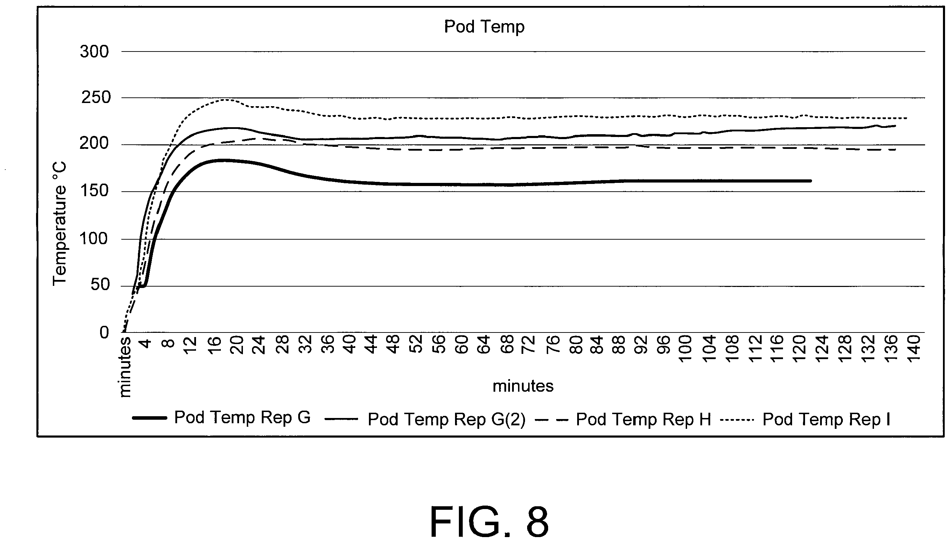

FIG. 8 shows a graph demonstrating length of time to heat up various pods containing transfluthrin and wax to high temperatures.

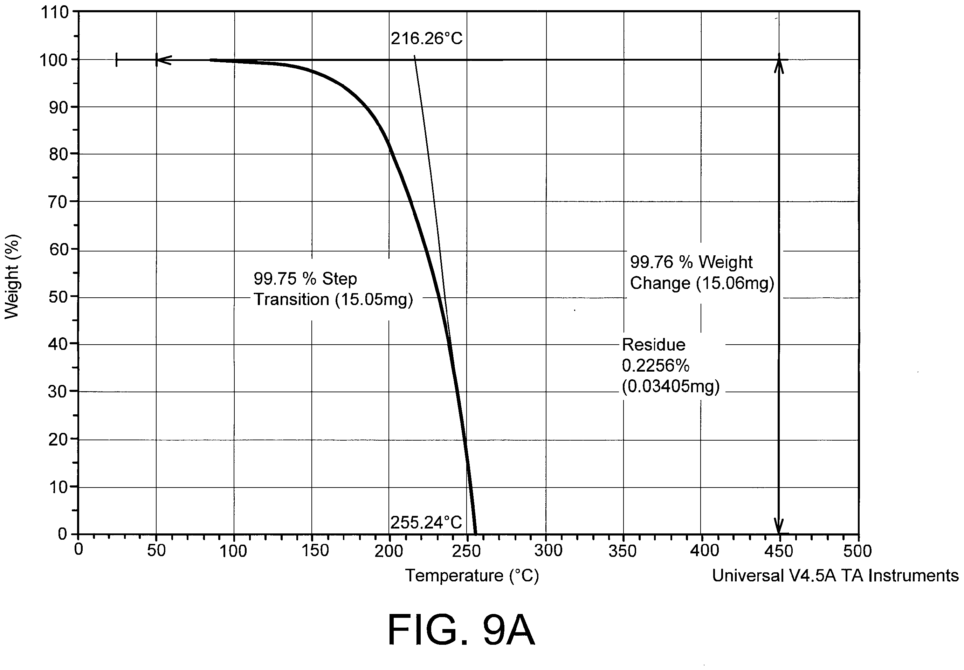

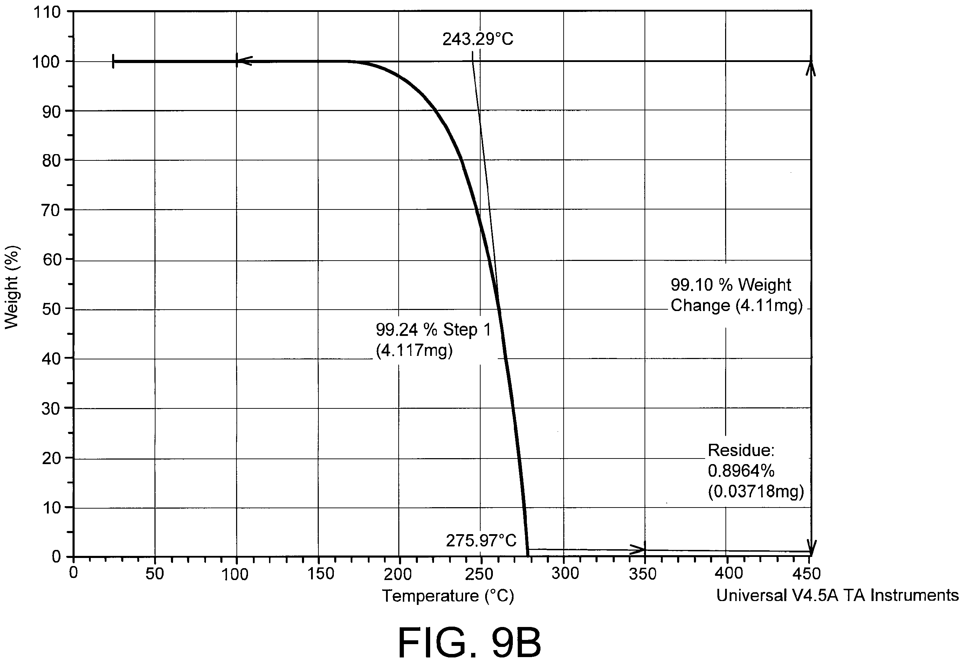

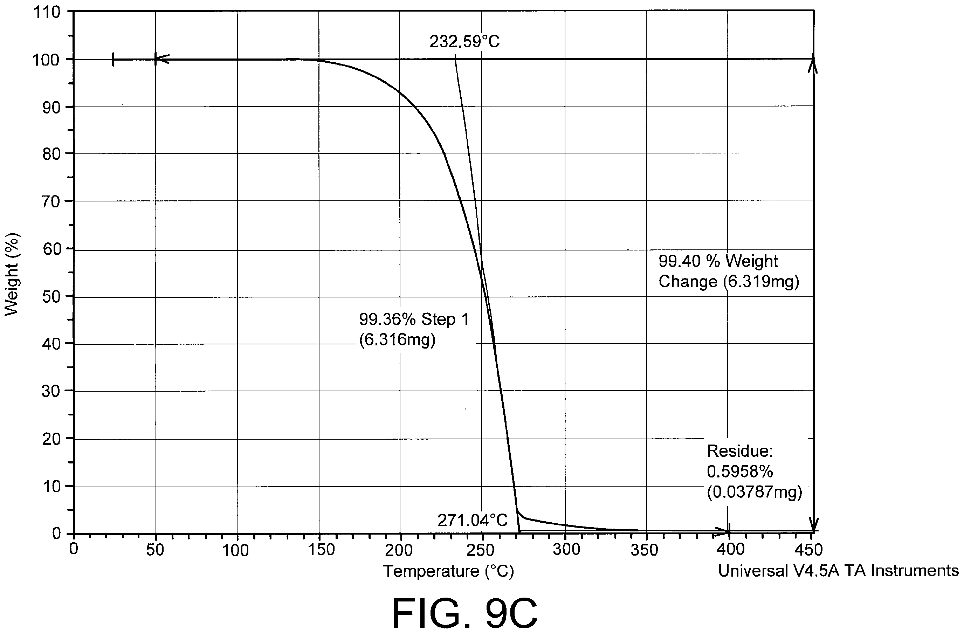

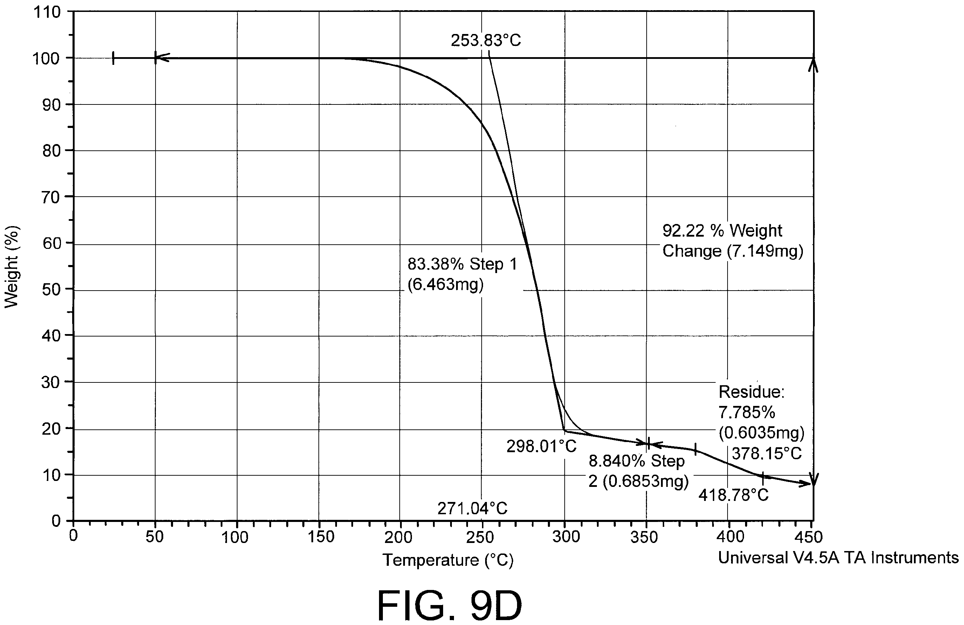

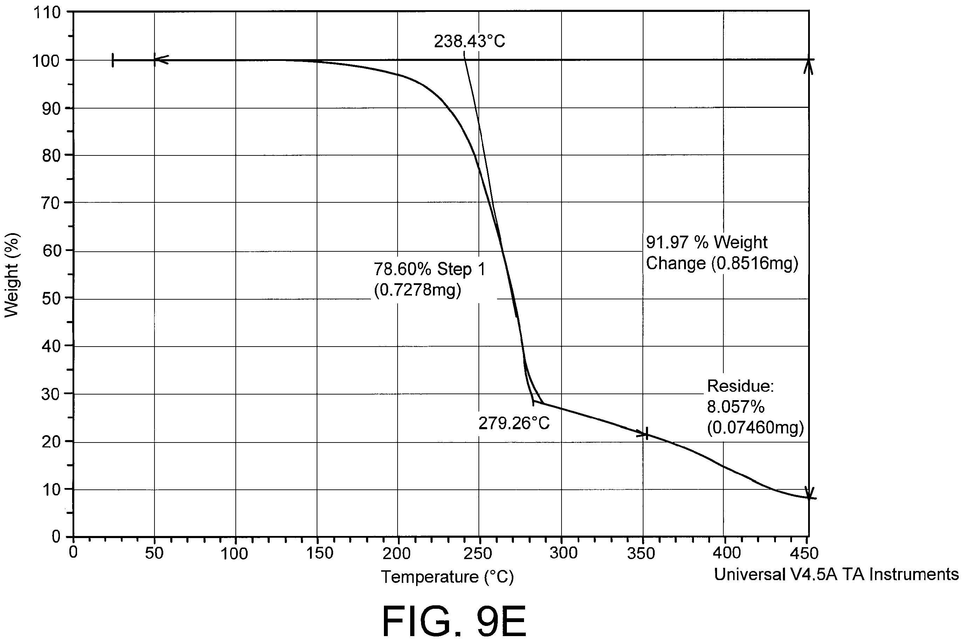

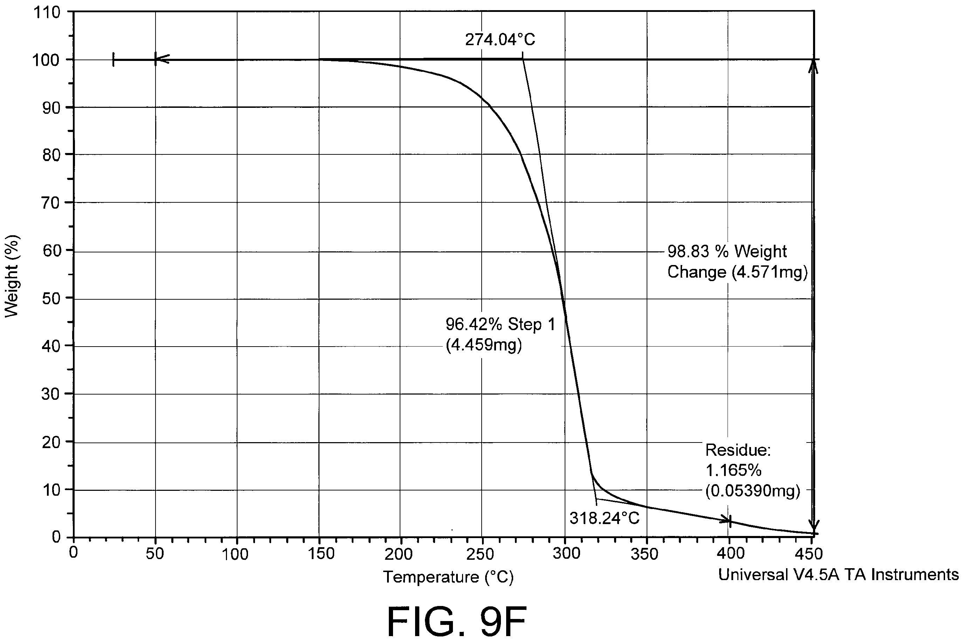

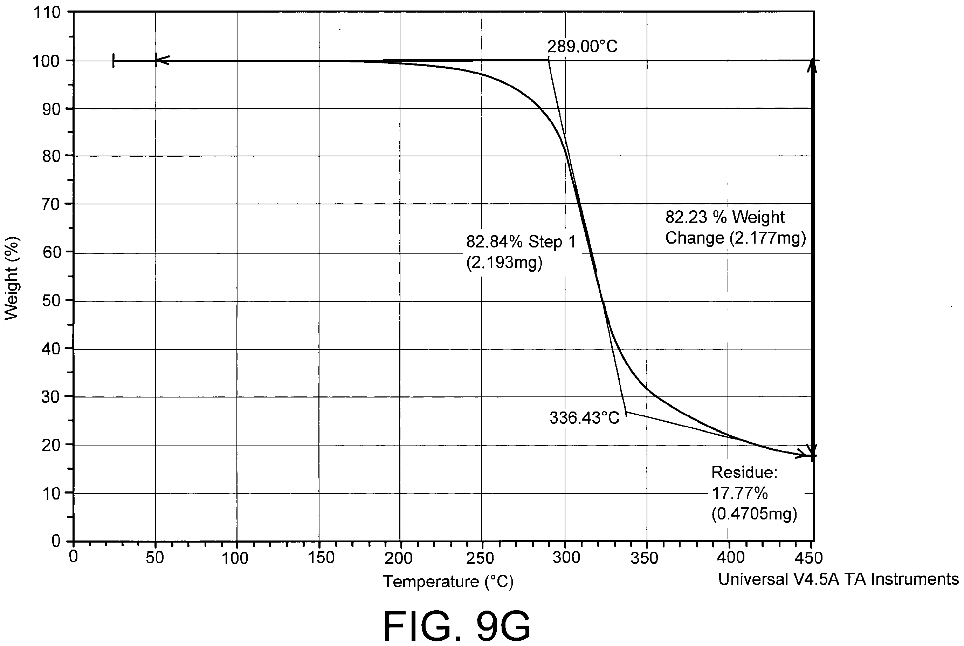

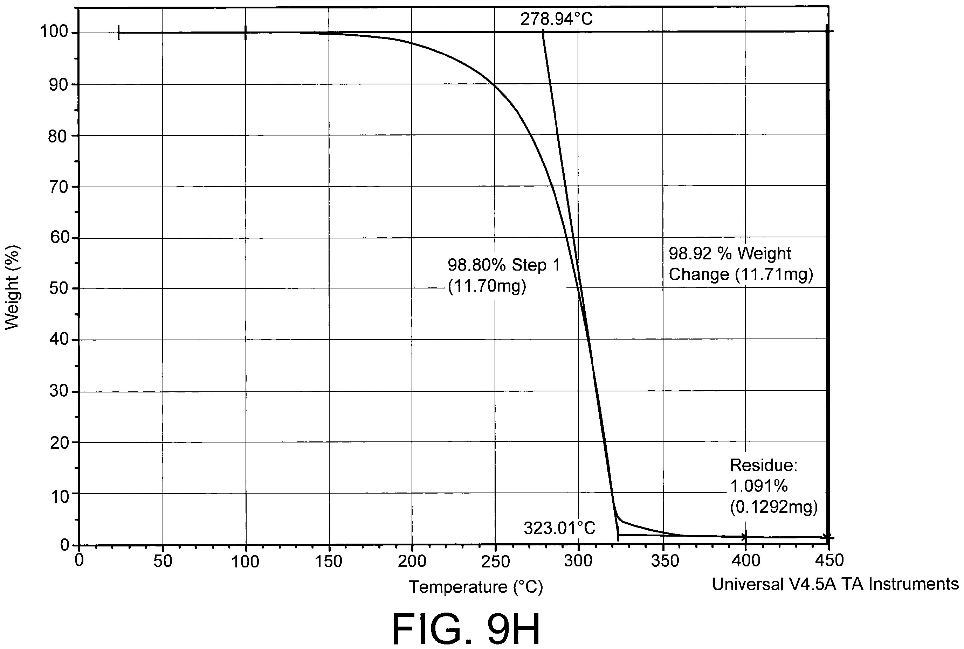

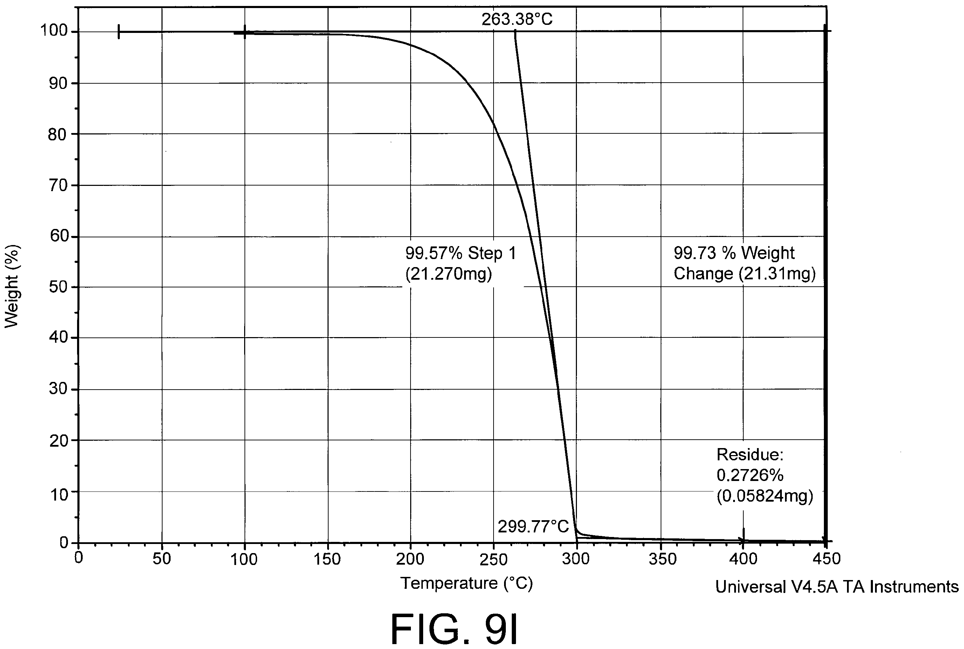

FIG. 9 shows TGA (thermal Gravimetric Analysis) measurement of different air treatment substances. FIG. 9A shows TGA measurement of transfluthrin characterizing the release profile of transfluthrin as a function of the temperature. FIG. 9B shows TGA measurement of meperfluthrin characterizing the release profile of meperfluthrin as a function of the temperature. FIG. 9C shows TGA measurement of dimefluthrin characterizing the release profile of dimefluthrin as a function of the temperature. FIG. 9D shows TGA measurement of prallethrin characterizing the release profile of prallethrin as a function of the temperature. FIG. 9E shows TGA measurement of imiprothrin characterizing the release profile of imiprothrin as a function of the temperature. FIG. 9F shows TGA measurement of tetramethrin characterizing the release profile of tetramethrin as a function of the temperature. FIG. 9G shows TGA measurement of flumethrin characterizing the release profile of flumethrin as a function of the temperature. FIG. 9H shows TGA measurement of momfluorothrin characterizing the release profile of momfluorothrin as a function of the temperature. FIG. 9I shows TGA measurement of metofluthrin characterizing the release profile of metofluthrin as a function of the temperature.

### DETAILED DESCRIPTION

Embodiments of the present invention are described with reference to the above-identified Drawings. However, the embodiments described herein are merely illustrative, and they are not intended to represent the full scope of the invention or limit the scope of the invention. It should be appreciated that various modifications of the present description of the invention are possible without departing from the spirit of the invention.

Different embodiments of a device for dispensing an air treatment substance discussed herein are shown in FIGs. 1-6. As shown in FIG. 1A, an embodiment of the device has a top portion/lid (1) and a housing/frame (3) with a base (11) and at least one side portion (12), a heat source (2) on or above a top surface of the base of the housing (11), a holder (7) configured to receive the pod (4) comprising a composition (4b) comprising at least one air treatment substance, wherein the device receives a heat source (2) and the pod (4) such that the heat source (2) can apply heat to the composition (4b) in the pod (4). The housing/frame (3) is configured to receive the heat source (2) between the holder (7) and the base of the housing (11). The various embodiments can also have one or more side openings or air vents (5) to help dispel the air treatment substance in a desired direction.

As seen in FIG. 1-3, for example, a device according to present embodiments may comprise a housing or frame (3) that can at least partially or fully surround or enclose the heat source (2) to protect the heat source (2) from the elements, e.g., wind or air movement, to minimize the potential heating capacity variation, and/or for decorative or aesthetic appeal. As also shown in FIGs. 1-3, for example, a device according to present embodiments may also comprise a holder (7) to receive a pod (4) at a certain or fixed position relative to the frame or housing (3), the heat source (2) and/or the top portion or lid (1) where the heat source (2) can apply heat to the pod (4). Since heat will generally rise from the heat source (2), such position of the pod (4) and holder (7) will generally be at a distance above the heat source (2), where the distance between the heat source (2) and the pod (4) can be used to affect or determine the amount of heat from the heat source (2) that is applied to the pod (4) comprising the composition. In addition to the holder (7) defining and ensuring a correct placement or positioning of the pod (4) within the device and relative to the heat source (2), the interior space, enclosure or chamber of the device can also define and ensure a correct placement or positioning for the heat source (2) within the space, enclosure or chamber of the device relative to the pod (4). The heat source (2) can be placed on an exterior surface, on which the device is also placed, or a base (11) of the device to support the heat source (2) at a predefined or intended position for properly heating the pod (4). The holder may be integral with and/or connected to one or more side portion(s) of the frame or housing (e.g., as shown in FIG. 1, 3 or 6) or integral with and/or connected to the top portion or lid (e.g., as shown in FIG. 2). As can be seen more clearly for example in FIGs. 2B and 2C, the holder may comprise a ring that is connected to the top portion or lid of the device, such as via a fastener or clip as shown. However, a wide variety of different suitable sizes and shapes for the holder (depending on the size and shape of the corresponding pod) and many different forms of attachment (fixed or reversible) to connect the holder to the top portion or lid, or to a frame or housing, are possible.

As seen for example in FIGs. 1-3, a frame or housing (3) of a device according to present embodiments can also help to guide heat from the heat source (2) to the pod (4), which may then warm up and melt the matrix of the composition in the pod (4). The frame or housing of a device may also elevate the temperature inside the interior space, enclosure or chamber of the device to provide more effective and/or efficient heating of the pod by the heat source. The housing or frame can be a variety of shapes and sizes. The frame or housing (3) of the device may have a continuous side portion with a rounded or curved shape when viewed in horizontal cross section when placed upright on a surface, such as a round, circular/circle or oval shape or other irregularly rounded or curved shape, or may have any number of side portions (e.g., three or more side portions, four or more side portions, etc.) such as two, three, four, five, six, seven, eight, nine, ten, eleven, twelve or more side portions, with a respective shape when viewed in cross section from above, such as any polygonal shape, including triangular, square, rectangular, pentagonal, hexagonal, heptagonal, octagonal, nonagonal, decagonal, etc.) or any shape comprising a combination of straight and/or curved side portions. For example, one embodiment of a device is shown in FIG. 3 as having a cylindrical shape or a round or circular shape in horizonal cross section when placed upright on a surface with one continuous side portion of the frame or housing (3). Other examples of present embodiments of devices are shown in FIGs. 1 and 2 as having a rectangular or square shape comprising four side portions that are exactly, nearly or approximately perpendicular to each other. Each side portion of a frame or housing of a device can be flat, planar, curved or twisted and may form a variety of permissible angles with an adjacent side portion(s) of the frame or housing of a device depending on the overall shape of the device and the number of side portions of the frame or housing. If a frame or housing of a device has a base, the base may have a shape that is identical, similar or dependent on the shape of the bottom part or edge of the side portions of the frame or housing of the device, but a base of a device may also have a different shape than the bottom part or edge of the side portions of the frame or housing and/or may extend or project outward beyond the side portions of the device.

The base, housing or frame and top portion or lid of a device according to present embodiments may, in whole or in part, comprise or be made of a metal, alloy, plastic, glass ceramic or other solid material, or a combination thereof, provided that the materials are suitable for higher temperatures, provided that the frame may further comprise a door, window or opening, and/or a mesh or other porous material that may not be considered solid. In general, the components of a device of the present disclosure should be made of a non-flammable solid material. For embodiments of a device or housing/frame having a circular or round shape, the dimensions of the device and housing/frame can be described in terms of its diameter in a horizontal plane when the device is placed upright on a surface. In some embodiments, a device or housing/frame with a round or circular shape may have a diameter in a range from about 1 cm to 30 cm, or preferably in a range from about 1 cm to 20 cm, or more preferably in a range from about 3 cm to 15 cm, and/or a height in a range from about 5 cm to 30 cm, or preferably in a range from about 6 cm to 25 cm, or more preferably in a range from about 7 cm to 20 cm. In some embodiments, a device or housing/frame with a square, rectangular or polygonal shape, the dimension of the housing can be defined by the dimension(s) of its side portions. For example, a side portion of a device having a square or rectangular shape can have a width in a range from about 2 cm to 20 cm, preferably in a range from about 3 cm to 18 cm, or more preferably in a range from about 4 cm to 16 cm, and/or a height in a range from about 5 cm to 30 cm, preferably in a range from about 6 cm to 25 cm, or more preferably in a range from about 7 cm to 20 cm. The device or housing/frame can also be defined in terms of the area dimensions (e.g., surface area) of the side portion(s) and/or base of the housing/frame of the device. In an embodiment, the area dimensions of a side portion(s) of the housing/frame can be in a range from about 1 cm² to 3000 cm², preferably in a range from about 10 cm² to 1000 cm², or more preferably in a range from about 20 cm² to 200 cm², and/or a height in a range from about 5 cm to 30 cm or preferably in a range from about 7 cm to 20 cm. The angle between adjacent side portions of a frame or housing of a device in a horizontal cross-sectional plane when the device is placed upright on a surface may vary depending on the size and shape of the device and the number of side portions. The angles between different side portions of a frame or housing may be identical, similar or approximately the same with an equilateral polygon, or may be different for more irregular shapes.

A device of the present disclosure may comprise one or more side portions or at least one side portion. A side portion of a frame or housing can form a solid support or structure, which may have one or more openings with or without a mesh or porous material or structure covering or spanning the opening(s) in the solid support structure or support surrounding the opening(s). The solid support or structure of the side portion may be transparent, translucent, opaque or non-transparent and may comprise, for example, a glass, metal, alloy, plastic (e.g., polycarbonate or other heat tolerant plastic) or ceramic material, or any combination thereof. As an example, a side portion of a frame or housing of a device may comprise a first solid support or structure and a second solid support or structure, wherein the first solid support or structure comprises a non-transparent material and the second solid support or structure comprises a transparent, translucent or opaque material that can serve as a window or light source or provide a decorative glow, and wherein the second solid support or structure may cover the area of the side portion (e.g., around at least a perimeter of the side portion) not covered by the first solid support or structure. As mentioned above, the side portion of the frame or housing structure can help guide the heat generated from the heat source to the pod while minimizing thermal losses and/or help guide the air treatment substance plume to a desired lateral direction. FIG. 1A demonstrates an example of a device with a second solid support or structure of a side portion serving as a window (6), which may be made of a plastic (e.g., polycarbonate) or glass material. As can be further seen for example in FIG. 1B, the frame or housing of the device may comprise multiple side portions (two, three, four, five, six, seven, eight, etc) having a window (6) and/or at least one side portion (12) of the device having a door (8) for access to the interior space of the device. Instead of a door, a device according to some embodiments may have an open area in at least one side portion (12) of the device for access to the interior space of the device to place or replace the heat source (e.g., candle).

According to embodiments of the present disclosure, the top portion or lid (1) of a device can be removable and rest on top of the housing or frame (3) (see, e.g., FIG. 1 and 3) or fixed to and/or made an integral part of the housing or frame (not shown). As seen in FIG. 3A and 3B, the top portion or lid (3) can be shaped to approximately match the size and shape of the outer rim or edge portion on the upper part of the frame or housing to enclose the space above the holder (and pod when placed in the holder). The interior space above the holder (16) can be (i) continuous with the portion of the interior space at least partially enclosed by the housing or frame below the holder (and pod when placed in the holder) (17), or (ii) separated by the holder (and pod when placed in the holder) from the interior space at least partially enclosed by the housing or frame and below the holder (and pod when placed in the holder) (17). The top portion or lid (1) can have a hanging projection (18) on the bottom of the top portion or lid (1) to ease handling and assist with the secure and proper placement and positioning of the top portion or lid (1) on top of the frame or housing (3) of the device. The embodiment in FIG. 3 shows a hanging projection (18) on the bottom of the top portion or lid (1) resting on an outer rim or edge portion on the upper part of the frame or housing. Alternatively, as shown for the embodiment in FIG. 1, a hanging projection on the bottom of the top portion or lid can rest on the holder (7) of a device with the placement of the top portion or lid (1) can be determined and guided by an upward projection (19) from the holder (7) or frame/housing (3) that may be slightly smaller in dimensions relative to the hanging projection on the bottom of the top portion or lid (1) (as shown) or slightly larger in dimensions relative to the hanging projection on the bottom of the top portion or lid (1) (not shown). Either or both of the hanging projection of the top portion or lid (1) and/or the upward projection of the holder (7) or frame/housing (3) may be continuous or broken along its perimeter.

As shown for example in FIGs. 1C and 5, the top portion or lid (1) is situated to block or inhibit a vertical flow of the at least one air treatment substance released from the pod (4) received by the holder (7) when the composition inside the pod is heated by the heat source (2), to help guide the at least one air treatment substance to exit the device in one or more lateral directions relative to the ground through at least one side opening or vent (5) in the top portion or lid (1) of a device (as shown in FIG. 1) near the top of the frame or housing (3) of a device (as shown in FIG. 3). Without the top portion or lid (1), the air treatment substance would be released and rise vertically up in the air, especially given that it is heated, and lead to little or no lateral diffusion of the air treatment substance within the surrounding space relatively near and parallel to the ground and around or occupied by people that the device is intended to benefit or protect. By having the top portion or lid placed on top of the frame or housing of the device, the air treatment substance can be directed to flow out of the device in a more lateral direction relative to the ground through one or more side openings or vents in the frame or housing and/or the top portion or lid to treat a desired space or area at a location where the device is placed and used, which may be defined as a space or area surrounding the device and below or mostly below a certain height above the floor or ground around or occupied by people, such as below or mostly below a height of 10 meters, 9 meters, 8 meters, 7 meters, 6 meters, 5 meters, 4 meters, 3 meters, 2 meters or 1 meter above the floor or ground, such as a within or mostly within a height range from about 0 meters to about 10 meters, or within or mostly within a height range from about 1 meter to about 5 meters, or within or mostly within a height range from about 1 meter to about 3 meters. The top portion or lid (1) can be made of any solid material, such as a material selected from the group consisting of metal, plastic, polymer, ceramic, glass, or alloy, or any combination thereof. The top portion or lid (1) can be any appropriate shape, size and/or design to allow the top portion or lid (1) to generally, partially or completely cover the top of the frame or housing and direct the flow or plume of the air treatment substance in a desired lateral direction through one or more side openings or vents of the frame/housing or top portion of the device. The top portion or lid of a device may be a variety of shapes, such as round, square or any other three-dimensional shape (or any two-dimensional shape when viewed in cross-section). As shown for example in FIGs. 1-3, 5 and 6, the top portion or lid may have a generally round or square shape. A top portion or lid of a device may also be described in terms of the shape of its inner or interior surface, which may include a flat, convex, concave, pyramidal, conical or other design or shape (see, e.g., embodiments in FIG. 5). As seen in FIG. 5, different shapes of the interior surface of the top portion or lid can lead to different types of spreading. For example, a convex shape (15a) may cause the flow or plume to go laterally upward, a flat shape (15b) may cause the flow or plume to go more laterally or horizontally, and a concave shape (15c) may cause the flow or plume to go laterally downward. In general, the object is to direct the air treatment substance to flow into the area desired to be protected, which may be in a generally lateral or downwardly lateral direction even if the device is placed on or near the ground to oppose the tendency of the heated air treatment substance to rise upward until it cools. Thus, according to some embodiments, a flat shape (15b) or a concave shape (15c) may be preferred contours or shapes for the interior or inner surface of a top portion or lid of a device to help guide or direct the air treatment substance to flow in a generally lateral direction.

In an embodiment, a top portion or lid can have a simple or flat design (e.g., a stainless steel plate on top of the pod) or a more "engineered" top portion or lid designed to spread or disseminate the air treatment substance in more complex ways (e.g., a lid or top portion with a chimney structure) that not only helps to guide the hot plume or flow of air containing the air treatment substance, but also cools down the plume or flow of air such that the air treatment substance is less likely to rise and can instead slow or spread in a more lateral direction on its own. (e.g., a thermal flow may be turned into kinetic energy or spread adiabatically to better disseminate the air treatment substance into a desired surrounding area. More complicated or engineered lid designs can be made, for example, via 3D printing, injection or form molds, extrusion processes or other methods known in the art.

According to embodiments of the present disclosure, a device may have at least one side opening or vent (5) in a top portion or lid (1) (see, e.g., FIG. 1), in at least one side portion(s) (12) of a frame or housing (see, e.g., FIG. 3), and/or in a gap or spacing between a top portion or lid and an upper edge or rim of a housing or frame (not shown) to allow, direct or guide the flow of a air treatment substance existing the device in a generally lateral or horizontal direction (e.g., to create a sufficiently effective concentration of the air treatment substance within a desired treatment area, such desired treatment area being within a limited distance above the ground or floor (e.g., within a range of about 0 meters to about 3 meters above the ground or floor). According to some embodiments, a side opening or vent may comprise a hole, opening or bore, which may exist in a variety of shapes, in a side of a top portion or lid or in a side portion of a frame or housing of the device. Alternatively, according to some embodiments, a side opening or vent may be formed as an indentation, notch or recess in the outer or upper rim or edge of a frame or housing (or side portion thereof), or in the outer or lower rim or edge of a top portion or lid, or both. As can be seen, for example, in FIGs 1, 2, 3, 5 and 6, an at least one side opening(s) or vent(s) (5) may be typically positioned or situated above and/or laterally from the placement of the pod and the composition comprising the air treatment substance. Accordingly, as shown for example in FIGs 1, 2, 3, 5 and 6, the at least one side opening(s) or vent(s) may also be positioned or situated above and/or laterally relative to the holder (7) configured to receive the pod (4) comprising composition comprising at least one air treatment substance (4b).

According to embodiments of the disclosure, a wide variety of different suitable sizes and shapes for the holder (depending on the size and shape of the corresponding pod) and many different forms of attachment (fixed or reversible) to connect the holder to the top portion or lid, or to a frame or housing, are possible. According to an embodiment, a holder (7) of the device may be located at various different locations within the housing or frame (3) or top portion or lid (1). Since heat will generally rise from the heat source (2), such position of the pod (4) and holder (7) will generally be at a distance above the heat source (2), where the distance between the heat source (2) and the pod (4) can be used to affect or determine the amount of heat from the heat source (2) that is applied to the pod (4) comprising the composition. As can be seen, for example in FIG. 1-3 and 6, the holder (7) configured to receive the pod (4) is generally located above the base of the housing (11), when there is a base (or above the exterior surface if the device is placed on the exterior surface), and can be located between the top portion (1) and the base (11) (or exterior surface).

The holder may be integral with and/or connected to one or more side portion(s) of the frame or housing (e.g., as shown in FIG. 1, 3 or 6) or integral with and/or connected to the top portion or lid (e.g., as shown in FIG. 2). As can be seen more clearly for example in FIGs. 2B and 2C, the holder may comprise a ring that is connected to the top portion or lid of the device, such as via a fastener or clip as shown. Or the holder can span one, two, three, four, five, six, seven, eight, or all of the side portions of the housing or frame as seen in FIGs. 1, 3, or 6. As can be seen in FIGs 1-3, the holder (7) can also comprise a plate or sheet surrounding an aperture or recess (21) shaped to receive and hold a pod (4) comprising a container (4a) and the composition (4b) disposed in the container. The aperture or recess of the holder (21) can be any appropriate shape, size and/or design to hold the container (4a) of the pod (4), i.e., generally round, square, or any other desired shape to conform to the shape of the container (4a) of the pod (4) (see FIG. 4). As shown for example in FIGs 1-4, the aperture or recess of the holder (21) may have a generally round or square shape. The holder (7) can be made of any solid material, such as a material selected from the group consisting of metal, plastic, polymer, ceramic, glass, or alloy, or any combination thereof. The holder (and pod when placed in the holder) (7) can either separate the interior space above the holder (16) from the interior space at least partially enclosed by the housing or frame below the holder (17) (FIG. 1), or the interior space above the holder (16) can be continuous with the portion of the interior space partially enclosed by the housing or frame below the holder (17) (FIG. 2).

According to embodiments of the present disclosure, the device can also have a second holder (13) configured to receive the heat source (2). FIG. 2. The second holder can also have a wide variety of different suitable sizes and shapes (depending on the size and shape of the corresponding heat source) and many different forms of attachment (fixed or reversible) to connect the second holder (13) to the top portion or lid, or more preferably to a frame or housing, are possible. Since heat will generally rise from the heat source (2) to heat the composition in the pod (4), as seen in FIG. 2, the second holder is generally located between the first holder (7) and the top surface of the base (11) (or above the exterior surface when the device is placed on the exterior surface).

The second holder (14) may be integral with and/or connected to one or more side portion(s) of the frame or housing (e.g., as shown in FIG. 1, 2, or 3) or integral with and/or connected to the top portion or lid (not shown). The second holder may comprise a ring that is connected to the side portion(s) of the frame or housing (or top portion or lid) of the device, such as via a fastener or clip. Or the second holder can span one, two, three, four, five, six, seven, eight, or all of the side portions of the housing or frame as seen in FIGs. 2. As can be seen in FIG 2, the second holder (14) can comprise a plate or sheet surrounding an aperture or recess shaped to receive and hold a heat source (2) disposed in the container. The aperture or recess of the second holder (14) can be any appropriate shape, size and/or design to hold a heat source (2) or a container holding a heat source (13), i.e., generally round, square, or any other desired shape to conform to the shape of the heat source or container. As shown for example in FIG 2, the aperture or recess of the second holder (14) may have a generally round shape. The second holder (14) can be made of any solid material, such as a material selected from the group consisting of metal, plastic, polymer, ceramic, glass, or alloy, or any combination thereof.

According to the embodiments of the present disclosure, a seen in FIG. 1-3, 5, and 6, a device can be configured to receive a heat source (2) and a pod (4) comprising a composition comprising at least one air treatment substance such that the heat source (2) may apply heat to the composition in the pod (4b) to a sufficient degree to release the air treatment substance into the air. In an embodiment, the heat source (2) may apply heat to the composition (4a) in an even way to achieve a desired release rate of the air treatment substance.

In an embodiment, the heat source (2) can heat the composition comprising at least one air treatment substance in the pod (4b) to any desired temperature to obtain a desired air treatment substance release rate based on the desired air concentration of the air treatment substance and volume of area to be protected. Since heat will generally rise from the heat source (2), such position of the pod (4) and holder (7) will generally be at a distance above the heat source (2), where the distance between the heat source (2) and the pod (4) can be used to affect or determine the amount of heat from the heat source (2) that is applied to the pod (4) comprising the composition. In an embodiment, the device can be configured such that the distance between the heat source (2) and the bottom of the pod (4) can be any distance wherein the heat source (2) can heat the composition in the pod (4) to a the desired temperature to release the air treatment substance at a desired rate. In an embodiment, the device can be configured such that the heat source (2) can be placed at such a distance from the bottom of the pod (4) that the air treatment substance is substantially not degraded by the heat of the heat source (2), especially if the heat source is a candle, i.e. with no control of the temperature. In an embodiment, when the wax level of the heating candle (2) decreases, the distance between the flame and the pod (4) can increase (and vice versa), to be able to heat the composition in the pod (4) to a desired temperature to release the air treatment substance at the desired rate. In an embodiment, the distance between the heat source and the pod is about 0mm to 100mm, preferably about 1mm to 80 mm, more preferably about 5 mm to 60 mm, even more preferably about 5mm to 30mm, even more preferably from 5mm to 15mm. In an embodiment, the temperature at which the composition in the pod is heated to can be any appropriate temperature to release the air treatment substance at a desired rate, i.e., about 50-300°C, preferably about 100-250°C, more preferably about 140°C - 220°C, even more preferably about 150°C - 190°C, and particularly preferably 160°C - 180°C. In an embodiment, temperatures over 200°C can be acceptable, but generally should not last too long due to possible risk of pod wax degradation/ generating smoke. In an embodiment, the distance between the area configured to receive the heat source (2) and holder (7) configured to receive the composition in the pod (4b) can be adjustable or fixed.

In embodiments of the present disclosure, a heat source (2) can be powered by a variety of different ways, such as electrically powered, battery-powered, gas-powered, or being a candle (see FIG. 1-3), etc. In an embodiment, the heat source (2) should ensure as even a heating capacity as possible while also creating an aesthetically appealing look, i.e., warm visual atmosphere of a normal candle. In an embodiment, the heat source (2) can be disposable. In an embodiment, as seen in FIG. 1-3, the heat source (2) can be a candle comprising at least one wick and can be disposed in a container (13), wherein the heat source and container can be disposable or just the heat source can be disposable, and the container (13) can be fixed to the frame or housing (3). The container for the heat source (13) can be made of any solid material, such as a material selected from the group consisting of metal, plastic, polymer, ceramic, glass, or alloy, or any combination thereof, preferably glass, ceramic, metal, and plastic. The heat source (2) can be any appropriate shape, size and/or design to fit within a container (13) or recess or aperture of a second holder (14), i.e., generally round, square, or any other desired shape. As shown for example in FIGs 1-3, the heat source (2) can have a generally round shape. In an embodiment, the heat source (2) or container with the heat source (13) can rest on top of the recess or aperture of a second holder and is removable, or the container (13) can be fixed to the recess or aperture of a second holder.

In an embodiment, the heat source (2) can be a candle made of any conventional candle wax, such as wax selected from the group consisting of soy, paraffin, microcrystalline, petrolatum, gel, beeswax, and colza palmwax, or blend thereof, preferably from the group consisting of soy and paraffin, or a blend thereof. The at least one wick can be made of a material selected from the group consisting of zinc core, paper core, Wooden, RRD, and cotton, or a blend thereof, preferably zinc core. In an embodiment, the diameter of the at least one wick can be about 0.2 to 10 mm, preferably about 0.5 to 2 mm. In an embodiment, the amount of wax in the heating candle (2) can be any amount which is sufficient to heat the composition in the pod(2) to a desired temperature to achieve a desired release rate of at least one air treatment substance for a desired amount of time. In an aspect, the heating candle (2) can comprise 8-590g of wax, preferably 100-150g wax. The candle can optionally further comprise one or more additives selected from the group consisting of fragrance, an essential oil, a dye, and a release enhancer, preferably citronella.

In embodiments of the present disclosure, a device is configured such that a holder (7) can hold a pod (4) comprising a container (4a) and a composition (4b) disposed in the container. In an embodiment, the pod (4) can be disposable. As can be seen in Figures 1 and 3, the pod (4) can also further comprise a cover (4c) on top of the composition, which can optionally be perforated or solid. The cover (4c) can be present for any number of reasons, such as safety reasons, i.e., avoid spillage and formulation contact with skin. The pod container (4a) can be any material with good heat transfer properties, i.e., material selected from the group consisting of aluminum, steel, alloy, and copper, preferably aluminum. In an embodiment, as seen in FIG. 4, the pod (4) and pod container can be any of a wide variety of different suitable sizes and shapes to be disposed in a holder (7) and many different forms of attachment (fixed or reversible) to the holder (7) are possible. In an embodiment, the pod container can be of any shape which can be disposed inside a aperture or recess (21) of the holder (7) of any appropriate shape, size and/or design to hold a pod, i.e., generally round, square, or any other desired shape to conform to the shape of the pod. In an embodiment, as seen in FIGs. 1, 3, and 4, the container (4a) can have a hanging projection (20) on the top of the container (4a) to ease handling and assist with the secure and proper placement and positioning of the pod (4) in the recess or aperture of holder (21) of the device. The embodiment in FIGs 1 and 3 shows a hanging projection (20) on the top of the container (4a) resting on a rim or edge portion of the holder (7) surrounding the recess or aperture of the holder (21). Alternatively, as shown for the embodiment in FIGs 2B and 2C, the hanging projection (20) on top of the container (4a) may rest on a ring holder (7) that is connected to the top portion or lid of the device.

Furthermore, in embodiments of the present disclosure, the pod container (4c) can have more than one compartment, with wall(s) extending upward to divide up the different compartments. As seen in FIG. 4, the pod container (4c) can comprise two different compartments, wherein each compartment of the pod comprises different compositions, such as an air treatment substance and matrix composition (4b) or additive(s). For example, in FIG. 4, subpart 1(4a(1)) of the pod container (4c) can comprise a composition comprising an air treatment substance and matrix, and subpart 2 (4(a(2)) of the pod container (4c) can comprise a composition comprising another air treatment substance and matrix or a composition comprising at least one additive. In an embodiment, the pod container (4c) can comprise three, four, five, six, seven, eight, etc. different compartments.

In embodiments of the present disclosure, the composition (4b) in the pod (4) can comprise at least one air treatment substance. In an embodiment, the composition can further comprise a matrix and optionally at least one additive. In an embodiment, the at least one additive is present and selected from the group consisting of fragrance, essential oil, a dye, and release enhancer, in an amount of about 0.1-4%, preferably from the group consisting of citronella essential oil, lavender essential oil, and stearine.

In an embodiment, the matrix can be any inert solid substance immiscible with the at least one air treatment substance and/or capable of trapping and stabilizing the air treatment substance, wherein the matrix can partially or fully melts above 50 °C, or more preferably above 70°C . In an embodiment, as the pod (4) is heated by the heat source (2), the matrix can melt, which can allow the release of the air treatment substance into the air. The pod (4) can allow for adjusting the melting temperature of the matrix contained in the pod and in that way, can "calibrate" the release of the air treatment substance accordingly to reach the needed release rate. The matrix can comprise any inert substance capable of trapping and stabilizing the air treatment substance and then partially or fully melts above 50°C (or preferably above 70°C), such as wax, cellulose mat, sand core, or binder resin substrate, or a mixture thereof, preferably a wax. In an embodiment, the matrix can comprise any conventional wax, such as wax made of soy, paraffin, microcrystalline, petrolatum, gel, beeswax, colza palmwax, or a blend thereof, preferably soy wax, paraffin wax, or a blend thereof, more preferably soy wax. In an embodiment, the matrix can comprise any amount of wax which is capable of melting and releasing the air treatment substance in a desired rate for a desired amount of time, i.e., 0.5 to 50g of wax, preferably about 0.5g to 20g of wax, more preferably about 1g to 15g of wax.

In embodiments of the present disclosure, at least one air treatment substance in the composition (4b) in the pod (4) can be any active ingredient which starts to vaporize when heated up generally by the heat source (2). It can be selected from the group consisting of volatile pest control active ingredient, fragrance, natural essential oil, deodorizer, allergen control ingredient, disinfectant, and sanitizer, preferably a pest control active ingredient. In an embodiment, the at least one air treatment substance can be selected from the group consisting of organic phosphorous insecticides, natural repellents as citronella oil, natural pyrethrins and pyrethrum extract, and synthetic pyrethroids, or combination thereof, preferably pyrethroid. In an embodiment, the at least one air treatment substance can be selected from the group consisting of dimefluthrin, profluthrin, transfluthrin, furamethrin, metofluthrin, allethrin, prallethrin, phenothrin, permethrin, meperfluthrin, momfluorothrin, flumethrin, imiprothrin, and tetramethrin, or combination thereof. To seek insect control in a large space or outdoors on a patio, it is preferred to use a highly volatile active substance such as transfluthrin, metofluthrin, prallethrin, meperfluthrin, dimefluthrin, or momfluorothrin, or combination thereof, or allethrin, metofluthrin, momfluorothrin, or transfluthrin, or combination thereof.

In an embodiment, the at least one air treatment substance in the composition (4b) in the pod (4) can be present in an amount depending on the rate of desired release, lasting desired, and its intended use (indoors vs. outdoors), such as 2mg -2g (i.e., 600mg in about 10 g wax would be equivalent of about 6% air treatment substance). For example, if outdoor release of 25 mh/h and 24 hours lasting desired, 25 mg x 24 hour = 600 mg air treatment substance can be desired. However, if only 10 hours lasting desired, then 250 mg air treatment substance can be sufficient. In an embodiment, the concentration of the at least one air treatment substance desired can be about 0.01% to 75% g/g (quantity of air treatment substance over quantity of matrix), preferably about 0.03-20%, even more preferably about 0.04-10%. In an embodiment, the heat source (2) can contain about 120-150 g wax and the composition (4b) can comprise about 1-10% of at least one air treatment substance mixed with about 3-15g wax, which when heated, can provide for at least 24 hours of repellency/ killing of unwanted target pests. In an embodiment, the composition can comprise about 2mg -2g, preferably 10mg -1g, of air treatment substance mixed with about 0.5 to 50g, preferably 5g-25g, wax.

In an embodiment, as seen in FIG. 6, the device can optionally further comprise a fan (10). The fan can be a wide variety of different suitable sizes and shapes (depending on dimensions of the device) and many different forms of attachment (fixed or reversible) to connect the fan to either the top portion or lid (1), or to a frame or housing (3), are possible. According to an embodiment, the fan (10) of the device may be located at various different locations within the housing or frame (3) or top portion or lid (1) wherein the fan also helps to guide the at least one air treatment substance in the pod (4) to flow through the at least one side opening/ air vent(s) (5). According to an embodiment, the fan (10) can be located on the lid or inserted between the lid (1) and the pod (4) to further help with guidance of the air treatment substance plume. The fan can improve the device further by increasing air velocity and better guidance of the air treatment substance plume, which can increase surface of protection. In an embodiment, the fan can be powered by an external energy source or a thermal energy to help it rotate. For example, the fan can be electrically powered or powered using the flame heat to turn. In an embodiment, the fan can use thermal energy to rotate, which turns thermal energy into kinetic energy, which consequently reduces the plume temperature (and the trend for the plume to go vertically) which ensuring a better diffusion and mixing of the air treatment substance into the air.

Also provided herein is a method to disperse at least one air treatment substance into the air laterally to either repel and/or kill at least one target pest. The method can include
- using a heat source (2) to heat a composition (4b) comprising at least one air treatment substance to an optimum operating temperature which results in a desired release rate of the at least one air treatment substance, and
- guiding the air treatment substance to permit lateral or horizontal flow but not vertical flow (FIG. 1C and 5).

In an embodiment, the composition (4b) can further comprise a matrix and optionally an additive. In an embodiment, the at least one additive in the composition (4b) can be selected from the group consisting of fragrance, essential oil, a dye, and release enhancer, in an amount of about 0.1-4%, i.e., citronella essential oil, lavender essential oil, and stearine.

In an embodiment, the method to disperse at least one air treatment substance into the air uses a device discussed herein, and can heat the composition (4b) in the pod (4) disposed in the holder (7) with the heat source (2) to an optimum operating temperature to achieve a desired release rate of the air treatment substance. In an embodiment, the optimum operating temperature of the pod (4) can be an optimum matrix melting temperature which results in a desired air treatment substance release rate and avoidance of loss of air treatment substance as a result of burning or degradation.

In an embodiment, the optimum pod operating temperature can be defined and calculated according to the following:
(a) selecting the desired air treatment substance to be used in the pod (4),
(b) determining a desired air concentration of the air treatment substance (µg/m³) based on the at least one desired air treatment substance and target pest(s),
(c) calculating a desired air treatment substance release rate based on the needed air concentration and volume to be protected:
   - desired air treatment substance release rate = desired air concentration of air treatment substance x volume to be protected,
(d) running a Thermal Gravimetric Analysis (TGA) measurement on the air treatment substance such as those seen in FIGs 9A-I,
(e) defining the optimum pod operating temperature in order to obtain the desired air treatment substance release rate based on the TGA measurement.

In an embodiment, the distance between the heat source (2) and pod (4) can be any distance wherein when heated, the pod is able to reach the optimum pod operating temperature, such as about 1mm to 100mm. In an embodiment, to reach the optimum pod operating temperature, the heat source (2) can heat the pod to reach the optimum pod operating temperature, i.e., temperature of about 50-300°C, preferably about 100-250°C, more preferably about 140°C - 220°C and even more preferably about 150°C - 190°C. In an embodiment, the distance between the heat source (2) and the composition (4b) is adjustable.

The at least one air treatment substance in the pod (4) can be dispersed indoors or outdoors. The amounts of air treatment substance in the pod to be dispersed would be different for indoors or outdoors as outdoor release rate would likely need to be much higher than indoor release rate to ensure the same effect (i.e., same a.i. concentration/ m³). See Tables 1 and 2 below.

### Outdoor use:

**Table 1**

| | | Broad range | Preferred range | Particularly preferred range |
|---|---|---|---|---|
| Pod | **A.i. release rate** (depends on the a.i. used) | Transfluthrin: 1-500mg/h | Transfluthrin 5-100mg/h | Transfluthrin: 10-50mg/h |
| | | Metofluthrin: | Metofluthrin: | Metofluthrin: |
| | | 0.5-300mg/h | 1-100 mg/h | 5-50mg/h |
| | | Allethrin: 0.05-1g/h | Allethrin: 0,05-0,5g/h | Allethrin: 0,1-0,3g/h |
| | **Wax quantity in the pod** | 0.5 - 50g | 1-30g | 2-15g |
| | **Wax operating temperature** | 110-220°C | 130-200°C | 150-190°C |
| | Relative a.i. **concentration** (depends on expected lasting, and release rate. Ex: if release rate is 25mg, and lasting 10h then 250mg of a.i. is needed. If 2.5g wax is considered then the a.i. concentration would be 10%. | Transfluthrin: 0.01-30% | Transfluthrin: 0.05-20% | Transfluthrin: 5-15% |
| | | Metofluthrin: 0.01-20% | Metofluthrin: 0.01-15% | Metofluthrin: 0.01-10% |
| | | Allethrin: 10-60% | Allethrin: 10-40% | Allethrin: 10-25% |
| Heating candle | Wax consumption | 1-50g/h | 3-25g/h | 5-20g/h |
| | lasting | 2-100h | 4-50h | 5-30h |
| Coverage | typically 15x15 or 12x12 | | | |

### Indoor use:

**Table 2**

| | | | | |
|---|---|---|---|---|
| | | Broad range | Preferred range | Particularly preferred range |
| Pod | **A.i. release rate** (depends on the a.i. used) | Transfluthrin: 0.01-5mg/h | Transfluthrin 0.05-3mg/h | Transfluthrin 0.055-2,7mg/h |
| | | Metofluthrin: 0.005-3 mg/h | Metofluthrin: 0.007-2 mg/h | Metofluthrin: 0.01-15 mg/h |
| | | Allethrin: 0.1-100mg/h | Allethrin: 0.5-50mg/h | Allethrin: 1-30mg/h |
| | **Wax quantity in pod** | 0.5 - 50g | 1-30g | 2-15g |
| | **Wax operating temperature** | 100-200°C | 110-190°C | 120-180°C |
| | Relative a.i. **concentration** (depends on expected lasting, and release rate) Ex: if release rate is 25mg, and lasting 10h then 250mg of a.i. is needed. If 2,5g wax is considered then the a.i. concentration would be 10% | Transfluthrin: 0.01-15% | Transfluthrin: 0.05-10% | Transfluthrin: 0.5-5% |
| | | Metofluthrin: 0.01-20% | Metofluthrin: 0.01-15% | Metofluthrin: 0.01-10% |
| | | Allethrin: 10-60% | Allethrin: 10-40% | Allethrin: 10-25% |
| Heating candle | Wax consumption | 1-30g/h | 1-20g/h | 2-10g/h |
| | lasting | 2-150h | 4-100h | 5-80h |
| Coverage | 30m³ room or bigger | | | |

An example embodiment comprises dispersing transfluthrin outdoors, wherein the relative concentration of the formulation of the pod (4) is 5-15% concentration of transfluthrin in 2-15g wax, and the desired transfluthrin release rate is 10-50 mg/h. Another embodiment comprises dispersing metofluthrin outdoors, wherein the relative concentration of the formulation of the pod is 0.01-10% concentration of metofluthrin in 2-15g wax, and the desired metofluthrin release rate is 5-50 mg/h. Another embodiment comprising dispersing allethrin outdoors, wherein the relative concentration of the formulation of the pod (4) is 10-25% concentration of metofluthrin in 2-15g wax, and the desired metofluthrin release rate is 0.1-0.3 g/h.

An example embodiment comprises dispersing transfluthrin indoors, wherein the relative concentration of the formulation of the pod (4) is 0.5-5% concentration of transfluthrin in 2-15g wax, and the desired transfluthrin release rate is 0.055-2.7 mg/h. Another embodiment comprises dispersing metofluthrin indoors, wherein the relative concentration of the formulation of the pod (4) is 0.01-10% concentration of metofluthrin in 2-15g wax, and the desired metofluthrin release rate is 0.01-15 mg/h. Another embodiment comprises dispersing allethrin outdoors, wherein the relative concentration of the formulation of the pod (4) is 10-25% concentration of metofluthrin in 2-15g wax, and the desired metofluthrin release rate is 1-30 mg/h.

In an embodiment, the desired repellency or kill rate of at least one target pest can be at least 50%, 60%, 70%, 75%, 80%, 85%, 90%, 95%, or 99% for at least 2, 4, 6, 8, 10, 15, 18, 20, 24, 30, 40, 50 or 60 hours for outdoor use or at least 50, 100, 200, 250, 400, 500, 600, 750, 900, or 1000 hours for indoor use. In an embodiment, the at least one target pest can be any pest which can cause irritation to a mammal, such as insects like mosquitos.

Also provided herein is a kit comprising the device discussed herein, further comprising 1-15 or 1-10, or 1-5 disposable pods, and 1-15, 1-10, or 1-5, disposable heat sources.

Also provided herein is use of the device discussed herein to repel and/or kill a pest in an indoor or outdoor area. In an embodiment, the pest is mosquitoes.

Also provided herein is a composition (4b) comprising a matrix and at least one air treatment substance, wherein the matrix is an inert solid substance immiscible with the at least one air treatment substance which can at least partially melt above 50°C or preferably above 70°C. In an embodiment, the matrix comprises 0.5 to 50g of wax and the at least one air treatment substance is present at a concentration of about 0.01% to 75% g/g. In an embodiment, the composition further comprising at least one additive. Also, a device for dispensing at least one air treatment substance is disclosed herein comprising a heat source (2) and the composition discussed herein (4b), wherein the device is configured such that the heat source (2) can apply heat to the composition (4b). In an embodiment, the device further comprises a top portion (1) and a housing (3). Further, a pod (4) is disclosed comprising a container (4a) and the composition discussed herein (4b) disposed in the container. In an embodiment, the composition of the pod (4b) further comprises at least one additive.

### Definitions

The word "about" means a range of plus or minus 10% of that value, e.g., "about 5" means 4.5 to 5.5, unless the context of the disclosure indicates otherwise, or is inconsistent with such an interpretation. For example, in a list of numerical values such as "about 49, about 50, about 55," "about 50" means a range extending to less than half the interval(s) between the preceding and subsequent values, e.g., more than 49.5 to less than 52.5.

Where a range of values is provided in this disclosure, it is intended that each intervening value between the upper and lower limit of that range and any other stated or intervening value in that stated range is encompassed within the disclosure. For example, if a range of 1 hour to 8 hours is stated, it is intended that 2 hours, 3 hours, 4 hours, 5 hours, 6 hours, and 7 hours are also explicitly disclosed.

### EXAMPLES

### Example 1- Issues with incorporating active ingredient directly into candle:

An experiment performed in developing an insecticide/ transfluthrin (TFL) candle for outdoor use was to add TFL directly to wax. The initial TFL loading calculation (for adding TFL directly into the wax) based on both technical data from a candle data base (data base gathering technical information encompassing different type of commercial candle from the market) and the needed TFL release rate (mg/h hour) derived a desired amount of 0.02 - 0.5% TFL loaded into the candle. The obtained concentration was in a range as wax consumption (g/hr) strongly depends on the candle design (i.e,, 1 wick candle vs multiple wick candle).

TGA (Thermogravimetric analysis) measurements were performed on TFL technical (release profile measurements done at isothermal (55°C) and at constant temperature increase ratio (3K/mn)), and from that, it was discovered that release kinetic at "usual" candle melting temp (50-70°C) would not allow enough TFL release to get expected efficacy, and that TFL release is not linear. It was determined as well that release onset for TFL is around 100°C and far higher release ratio occurs at higher temperatures. The calculated estimated ideal temperature for TFL, for outdoor use, from the TGA measurement would be around 150°C.

The second problem discovered for a too low wax melting temperature was TFL degradation. Degradation is due to the fact that TFL will not evaporate quickly enough and most of the quantity of TFL in the wax will be consumed by the flame (like the wax). So, it was determined that adding TFL directly into the wax/ candle would not be practical.

### Example 2- Testing storage stability of different types of waxes:

Storage stability (for 2 weeks at 54°C and 72h at 70°C) and TFL release rate measurement after 1 hour burning tests were performed for 2 types of waxes loaded with 1% TFL: Soy and paraffin. Ageing oven and HPLC were used for these testing.

Both waxes demonstrated excellent stability while solid: 0% losses for both waxes when aged at 54°C (which is under the wax melting temperature) for 2 weeks, wax remained solid. However, soy wax was discovered to have better stability at the higher temp: 2.3% TFL losses when loaded in Soy wax vs 13.5% for Paraffin when at 70°C for 72h. For these ageing test samples of ≈12.5g mixture where used, a slightly higher release was discovered for the paraffin wax.

### Example 3 - Testing of pod concept and different temperatures to heat the pod

The first directional efficacy testing (Parts I-III) was done at a lab with and without flame:
with flame = TFL mixed into the wax of a single wicks candle. Wick lighted as a "normal" candle generating the heat to melt the wax with expectation to release enough TFL.
without flame = TFL mixed into wax and then poured into a "pod". In these tests, a heating plate was used to melt the wax at the expected temperature.

### Part I- Testing of TFL incorporated into candle vs. pod concept

Semi field (green house) efficacy testing. 1.4% TFL was incorporated in approximately 12g of soy wax to form a candle, and the wick of the candle was lit. Wax melt at the "normal" temperature (approximately around 60-70°C) (testing with flame). The 1^{st} test was performed with one candle only and a 2^{nd} test was performed 3 candles (to mimic a 3 wicks candle and to multiply by 3 the release vs single one). 125 mosquitoes were released and 3 traps were used (to check repellency) plus one cage with mosquitoes near the candle was used to check mortality. No real efficacy was seen with these soy candles: no mortality and no repellency demonstrated.

From the results of this experiment, 2 hypotheses were derived: either the TFL is burned by the flame and/or the TFL is not properly spread in the room (go straight vertically). So, it was decided to repeat the semi field test with higher TFL loading (5%) and run test without the flame (by using of a hot plate) indoor checking mortality only, and/or prepare a larger candle.

The next experiment was also a semi field efficacy testing. 1% and 5% TFL were incorporated in in approximately 12g Soy wax, and 1% TFL was also incorporated in approximately 12g paraffin wax to form candles. All candles also contained 1% Citronella. The wick of the candles was lit. to around "normal" wax melting temperature (around 60-70 °C) (test with flame). No efficacy was seen with Soy candles whatever the TFL concentration is. For the 1% TFL in Paraffin, reduction by 50% of the trapped mosquitoes was observed.

The next set of experiments were a simple tests indoor. The first experiment used a hotplate to heat a 1% TFL incorporated candle to "normal" wax melting temperature (around 60-70°C) (no flame) with caged mosquitoes placed 1' above the candle: 100% mortality was observed almost instantly after placing the mosquitoes above the candle. The same indoor test was repeated by lighting the candle instead of using the hotplate to heat the candle: no mortality was observed. This confirmed that the flame is consuming and/or degrading most of the TFL when TFL incorporated candles are lit.

### Part II- Testing of pod concept at lower temperature

Semi-field test. 5% TFL + 5% citronella were incorporated in approximately 12g soy wax into a candle. A hot plate (no flame) was used to heat the candle with the temp setting at 70°C. 2 cages were placed at 1' and 2 at 3' distance from the setup (not directly above) with mosquitoes inside. Very little mortality was observed: only 1 cage placed at 1' away had 5 dead mosquitoes out of 25 found. No mortality was observed in the other cages.

At the end of the above test, the candle (still melting) was placed in a carton box (24"x20"x24") with one cage of mosquitoes. The box was closed. All mosquitoes were observed to have died in <30min.

These tests confirmed that TFL is released and efficacy can be reach, but not sufficiently efficacious for large semi-field greenhouse testing. The question was whether the TFL release is not enough and/or is it a question of TFL spreading? Wax melt temperature increase (eg original finding with TGA measurement) was next to be tested.

### Part III- testing efficacy of different temperatures to heat pod

One indoor testing was performed with 5%TFL+5% Citronella incorporated in approx. 12g soy wax. A cage with mosquitoes was placed 15' away from the candle. A hotplate was used to heat the candle to a higher temp (>100°C, exact temp was not recorded). All mosquitoes were observed to have been killed. This confirmed that melting temperature is key.

The next indoor testing was performed with 2 different waxes (soy and paraffin, approximately 12g) loaded with 4% TFL. A hotplate was used to melt the candle (no flame test), with 3 temperatures tested (approx. 120°C, 130°C, 145°C). 6 cages with mosquitoes were placed at 1', 3' and 6' distance away from the candle in 2 opposite direction and at same height as the candle. Mosquito knockdown after 1h and mortality after 24h were checked.

Excellent results were obtained. *See* Figure 7. The higher the temperature tested, the higher the efficacy was demonstrated for both knockdown and Mortality, for both soy and paraffin wax.
- Mortality was very similar for both waxes:
   ∘ approximately 70% observed for melting temp around 120°C,
   ∘ 90% for temp around 130°C, and
   ∘ 100% for temperature around 145°C.
- For knockdown:
   ∘ at 145°C and 133°C, almost 100% and 95% was observed for the waxes respectively,
   ∘ at 120°C, paraffin reached >90% and soy reached <60%.
Release quantity was also measured confirming that release is not linear (eg TGA measurement). From 120°C to 145°C a >4-fold higher release was observed. This was confirmation that higher temp gives best results. 145°C was new target temp for next testing.

Similar testing was repeated with 2% TFL instead of 4% TFL using a hotplate to heat the candle to the same 3 temperatures (approx. 120°C, 130°C, 145°C). Knockdown was recorded every 10' and Mortality at 2, 4 and 24h.
- At approx.. 120°C: knockdown started at 30-40 min for Paraffin and at 50min for Soy. Then 20min later, both reached more than 80-90% Kd. For both, almost 100% Mortality at 2h, then a certain recovery observed at 4 and 24h.
- At approx.. 130°C: Kd started at 40min to reach almost 100% after 60min for soy, with paraffin being a little faster. 100% Mo seen for both wax with very little recovery at 24h (5-10%).
- At approx. 145°C: Kd started at 30min to reach almost 100% after 50-60min for paraffin, with Soy being a little faster. 100% Mo for both wax at 2h,4h, and 24h.
This testing with more regular record of efficacy (Kd & Mo) allowed to confirm the need to reach high temp to get faster and better efficacy. No significant different between the 2 waxes from efficacy standpoint.

Similar testing was performed indoors with 2% TFL candle in soy wax heated by hotplate to 140°C only. Similar results were obtained with excellent efficacy (100% kd at 50min and 100% Mo at 2h,4h, and 24h).

Using the same candle as above (2% TFL incorporated in approx. 12g soy wax heated by hotplate to 140°C), new semi-field testing was performed with mosquitoes in cages placed at 1',3',7,5',10' away from the candle + 1 cage above the candle. 1st test: one candle and a fan was used to improve TFL plume spreading used during the 1st hour of testing. 2^{nd} test: 3 candles (no fan). Control of the kd was every 15min.
- Test 1: 20-40% kd observed only on the cage placed at 10' away from the candle after 45min, and 100% kd on the cage above the candle after 75 min. Almost 0% kd observed for the other cages.
- Test 2: similar results observed but 100% on cage above the candle reached after 150min.
With these setting and formulations (2% TFL in a approx. 12g soy wax melt at 140°C), excellent efficacy was reached indoor but very limited outdoor efficacy. Fan helped to improve the efficacy. The question remains of how to improve release rate and active ingredient spreading in an open space.

The next experiment was performed on the same candle (2% TFL incorporated in approximately 12g soy wax, heated by a hotplate (no flame)). A semi-field testing was performed for repellency check instead of kd & Mo. 200 mosquitoes were released in the room and the number of mosquitoes caught in a CO₂ trap place 24" away from the candle was checked. 3 candles were used at the same time. With this configuration, 93.3% of the released mosquitoes were trapped when no candles are used, and 14.2% trapped when the 3 candles are used + many mosquitoes found dead on the floor. This testing session demonstrated that free flying mosquitoes (vs caged one) are more impacted by the product as tested which can deliver a pretty good repellency performance in an open space. This raised again the question of active ingredient diffusion / exposition to the mosquitoes

### Conclusions from testing above:

- A "pod mode" (wax melted by an external heat source / no flame) allowed the setup to reach far better efficacy vs "candle mode"
- The higher the melting temp the better
- No significant difference between soy and paraffin wax from an efficacy standpoint
- Tested configurations can give excellent performances indoor
- Tested configurations are not performing enough for outdoor use

### Example 4 - Testing " inserts"

Even though the pod setup showed far higher performance (kill & repel) vs TFL in a normal candle, a test was performed on TFL candle to find a means to transfer some of the energy generated by the flame to the wax with the objective to increase the wax temperature and consecutively increase the TFL release rate to the needed one. Different aluminum "inserts" of varying lengths and sizes were placed in the wax, close to the flame. Although the results demonstrated that the insert temperature increased, this did not result in a significant wax temperature increase and there were difficulties to properly position and maintain the insert in a proper position.

### Example 5 - Testing simple lids

Another test performed focused on TFL plume spreading using simple lids. A "normal" candle comprising a 3 wicks candle loaded with 2% TFL in soy wax with a total candle weight around 800g was used. A zinc-cored wick was used to increase wax melting temperature. Max wax temp was measured at 88°C (so likely zinc-cored wick vs. normal wick increased temp by about 10-15°C). The candle burn rate was ≈15g/h wax. The lids used were simple square piece of material (stainless steel and brick) 8"x8" placed about 7.25" above the candle. The tests were performed indoors. 6 cages with 20 mosquitoes each placed at 1', 3' and 6.5' away from the candle. The kd was monitored every 15min.
Without lid: Kd started after 1.5h (<20%) and increased to ≈80% 15 min later to reach 100% after 2h.

### Stainless steel lid (non-porous):

1^{st} test: lid was placed above the candle after 1h. There was a slight improvement vs without lid as 100% kd was reach after 1.5h.
2^{nd} test: lid was placed above the candle from the start. 100% kd reach after 1h (previous check after 30min there was 0% kd, so kd occurred somewhere between 30min and 1h).

Brick lid (Porous - placed at start): The lid was placed above the candle from the start and was allowed to gain 15-30min vs without lid. 80% kd was reached after 1h15min.

This confirmed that use of a lid, even a very simple one, improved the TFL horizontal spreading allowing to have a faster efficacy onset.

The theoretical TFL release (if no degradation which we know is not the case. Calculation based on candle weight losses and TFL concentration) is 350-430 mg/h which is far higher vs theoretical target.

### Example 6 - Using candle instead of heating plate and testing different pod materials

Another test performed tested the ability to use a candle to heat the pod (versus the heating plate) and checked the reachable wax melting temp based on pod container type and size. Tea light aluminum, ceramic and stainless-steel (pod) containers were tested. All tests were performed with approx. 11g of wax (without TFL) in the pod. 2 distances (from heat candle flame to the pod container bottom) were tested: 1.25" and 2". Single and triple wick heat candles were used. Wax melt temp was measured from 110 to 240°C.

Results: Ceramic container gave the lowest melt temp (logical as heat transfer is the lowest), followed by stainless steel, while Aluminum gave best heat transfer to reach highest melt temp. Approximately 60°C temperature difference for the 2 distances measured.

Conclusion: candle can be used as a heat source to replace the heating plate. There is a high variation of the wax melting temp for different distance to the flame and material used for the pod container. Aluminum is the preferred one from thermal transfer standpoint.

### Example 7 - Testing of candle with TFL vs. Pod concept (at different temperatures/ fan/lid)

An 8-month testing was conducted at a lab: all indoor testing. There was a total of 41 experiments performed with an evaluation of both:
- Candle with TFL in the candle wax (all tested samples were large candles with approx. 800 grams wax, 3 zinc core wicks, and different TFL loading) (with flame)
- Pod concept: ""normal 3 wicks"" candle used to heat the pod (pod contains approx. 10-12g wax + 200mg TFL) (no flame).
The testing was done in an indoor large building (24.5'L x 24.5'W x 10'H). Caged mosquitoes were placed in 4 different directions, and at different heights and distance to the candle (including cages above the candle). 67 cages, each with 20 mosquitoes, were used, allowing to have a good evaluation of spatial spreading of the active ingredient and associate efficacy. Evaluation of Knock down was done every 15 min until 60 min, then a mortality check was performed at 2h and 4h and 24h.

### Results:

**A cohort** - Examples 40-41: testing of a TFL candle found on the market - 0.5% TFL incorporated in a candle with a single wick. Very poor results, Hardly any reached 40% Kd or Mo and even above the candle, only a few cages reached more than 70% efficacy.

**B cohort** - testing with various amounts of TFL incorporated in the candle (with flame) with wax melting temp in the range of about 70-80°C: this cohort showed very little efficacy. For all, only cages above the candle reached 100% efficacy in 15-30 min. However, when there is a means to disperse the TFL plume (i.e. fan), there was some improvement demonstrated.
- Experiments 1-3: 0.5% TFL candle (with flame) used. 100% efficacy above the candle after 30min. Very low knockdown (Kd): only few cages (less than 5) at 60min reached more than 70% kd. Very low Mortality (Mo): only few cages (0 cages for exp. 2 and 3 and approx. 30 cages for exp. 1) measured more than 70% Mo.
- Experiment 4: 1% TFL candle (with flame) used. 100% efficacy above the candle after 30min. Very low Kd and Mo (only 3 cages reached 85-100%) and all others stayed below 30-40% (a lot had 0% efficacy).
- Experiment 5: 0.5% TFL candle (with flame) used. 100% efficacy above the candle after 15min. Kd started at 60min (almost nothing before) with majority of the cages above 70% kd. Mo was pretty good (> half of the cage >70%).
- Experiment 6-7: 0.5% TFL candle (with flame) used. 100% efficacy above the candle after 30min. Kd started at 60mn (almost nothing before) but only few cages reached above 70% Kd. Same for Mo.
- Experiment 8-12: Exp. 9-11 with 0.5% TFL candle used and Exp. 8 & 12 with 1% TFL candle used. Similar results as Exp. 6-7.
- Examples 16-19: 0.5 & 1% candle (with flame) used. No significant improvement vs Exp. 1-12. Variation can be observed from one rep to another but for all not enough vs target.
- Examples 20-21: 0.5% TFL candle (with flame) used, with the addition of a simple fan on top of the candle. Only difference between the rep 20 and 21 is the fan design. But in both cases, it is a simple fan made of aluminum foil which uses heat from the candle to rotate (one found from the market the 2^{nd} one done manually). Still 100% Kd observed on cages above the candle. Efficacy started after 30min to reach >70% for most of the cages after 45 min and close to 100% at 60 min. Mortality close to 100% for most of the cages at 2h,4h, and 24h.
   ∘ This showed clear improvement when having a means (in that case the fan) to disperse the TFL plume.

**C cohort:** testing of pod with 2% TFL incorporated in approximately 10-12g soy wax (without flame) heated by hot plate or candles to different temperatures, with and without lid. This group showed excellent efficacy at higher temperatures, and a lid resulted in improvement.
- Examples 13-15: 2% TFL pod heated by a hot plate to a temperature range of about 150-190°C. This also demonstrated very poor results with only cages above the pod reaching 100% Kd in 15 min.
- Examples 22-23: 2% TFL pod heated by a hot plate to higher temperature (140-150°C). This led to 100% kd at 30 min for all cages and 100% Mo for all cages for all testing duration (certain cages even reached 100% in 15min).
- Examples 24-25: 2% TFL pod heated by a 3 wicks candle heating to a pod wax melting temp of 160-130°C (temp decrease over the testing duration). This led to excellent efficacy, similar to rep 22/23 but even better as more cages had kd in 15 minutes.
- Examples 26-27: same as Exp. 24/25 + Lid (simple stainless-steel lid placed above the pod). Slight improvement obtained with even more cages at 100% Kd and Mo at 15mn.
- Examples 28-39: Similar as Exp. 26/27 but used aged pod with following pre burn duration: 6h, 18h, 30h, 40h, 50h up to 60h (for each ageing 2 rep have been done): Still excellent result demonstrated in line with rep 22/27. Onset was 15-30 min.

### Conclusion:

- Pod concept show far better results and in line with expectation (100% efficacy in a very short time)
- Pod (2% TFL, 10-12g soy wax) worked very well even until 60 hrs of use
- Wax melt temp was key and about 150°C was a good target
- Using a candle to heat the pod worked well even if there was temp variation over time
- Simple lid improved TFL plume dispersion (was slightly difficult to assess the exact improvement as all results were excellent)
- Fan significantly improved TFL plume dispersion

### Example 8- Repellency testing of pod/ lid/ device prototypes in semi-field testing

A 4 months semi-field testing was performed in a 30'x60' greenhouse outdoor to test for repellency of mosquitos. Total of 33 experiments were performed. Tests were initiated with device prototypes.

Protocol: In one end of the greenhouse, 3 CO₂ traps are positioned at 120 degrees apart from one another at the same distance to location of the sample to be tested with candle positioned in the middle. Different radius of this "traps circle" have been tested to check different coverage /area of protection (6'; 7.5' and 8.4' radius, respectively equivalent of 8.5x8.5', 10.5x10.5' and 12x12' area of protection according to the protocol). Yellow fever mosquitoes were used: 450 released in the pre-treatment stage and 200 released prior to the post-treatment. Release was done at the other greenhouse end. Repellency ratio is calculated by formula comparing trapped mosquitoes with / without the sample. Some experiments used a heating candle to heat a pod containing approximately 10-12g soy wax with different TFL concentrations incorporated to a target melting temp. of 150°C (no flame). Other experiments used a 3-wick candle with TFL incorporated (with flame).

1^{st} testing period- confirmed that the pod invention can result in repellency >75%. No significant impact of the tested radius on the results.
- Pods with 2% TFL incorporated in approx.10-12g soy wax were tested (from fresh (i.e., unused pod) and up to 3.5h ageing) at 7.5' radius of protection. An average of 86% repellency was obtained.
- Same pods were tested (from 3.5h up to 8.5h ageing) at 6' radius of protection. Average repellency of 83% was obtained.
- Fresh pods with 1% TFL incorporated in approx. 10-12g soy wax were tested at 6' radius of protection. Average repellency of 32% was obtained.
- Pods with 2% TFL incorporated in approx. 10-12g soy wax were tested at 6' radius, all fresh (4 exp.: 2 with normal pod (about 38 mm diameter and 14-16mm height) and 2 with larger pod (about 54mm diameter with same height), only the container size changed). An average repellency of 84% was obtained. No difference observed between the normal container and the larger one.

2^{nd} testing period- evaluation of 3d printed lids (to redirect the TFL plume in different ways) on both a TFL candle and a TFL pod. Different 3D printed lid shapes had different sized vents (by virtue of the distance the lid was raised) to release active ingredient plume. All achieved good repellency, but the distance the lid was raised puts forth a question of size of the vent needed for proper release of TFL.
- Exp. 1: Large (approx. 800g soy wax) 3 wick 1% TFL candle with lid on top was tested at 6' radius of protection. 87% repellency was obtained.
- Exp. 2: pod with 2% TFL (heated by hot plate) with same lid on top was tested at 6'radius of protection. 72% repellency was obtained.
- Exp. 3: Similar as exp. 2, but the lid was raised by ¾". 77% repellency was obtained.
- Exp. 4: same as exp. 1 at 8.4' radius of protection. Repellency of around 56% was obtained.

3^{rd} testing period - testing with different design prototypes for the device (all prototypes based on the same concept of having a candle heating the pod with a lid on top). The prototypes had metallic plates used to adjust the pod positioning vs. heating candle, and spacers to adjust the vent size between the lid and the frame. Different device prototypes tested were of metallic, plastic, and ceramic material and had square, round, and hexagonal shaped structures. The selected designs tested resulted in no significant impact on the performances, and all had excellent repellency.
- Exp. 1: Fresh pod (no flame) containing approx.10g Soy wax and 2% TFL incorporated tested at 8.4' radius of protection. The pod was inserted in a "square lantern" with glass windows prototype (*see* Figure 1a-c). Repellency of 78% was obtained.
- Exp. 2: Fresh pod (no flame) containing approx. 10g Soy wax and 2% TFL incorporated tested at 8.4' radius of protection. The pod was inserted in a "square lantern" prototype with no windows. Repellency of 60% was obtained.
- Exp. 3: Pod (no flame) containing approx.10g Soy wax and 2% TFL incorporated was tested at 8.4' radius of protection. The pod was inserted in a "round lantern" prototype with no windows. The pod was a 1.75h aged pod. Repellency of 65% was obtained.
- Exp. 4: Pod (no flame) containing approx. 10g Soy wax and 2% TFL incorporated was tested at. 8.4' radius of protection. The pod was inserted in a "small ceramic" prototype (*see* Figure 3a-b). The pod was a 1.75h aged pod. Repellency of 74% was obtained.
- Exp. 5: Pod (no flame) containing approx. lOg Soy wax and 2% TFL incorporated was tested at 8.4' radius of protection. The pod was inserted in a "large ceramic lantern" prototype (*see* Figure 3a-b). The pod was a 3.75h aged pod. Repellency of 78% was obtained.

4^{th} testing period - additional testing was done with the prototypes with either more aged pod or slight adjustment on the design.

Exp. 6-7 focused on citronella candles (with flame) which had low repellency:
- Exp. 6: 3% Citronella candle (with flame) was tested at 8.4' radius. The candle was not contained in any structure. Repellency of 35% was obtained.
- Exp. 7: 3% Citronella wax (no flame) (melted on a hot plate) was tested at 8.4' radius. The wax was not contained in any structure. Repellency of 44% was obtained.

Exp. 1-4 had lower than expected repellency, which might have been related to the testing period or mosquito's activity. These results were not indicative and the experiments were repeated.

Exp. 5 and 8-10 were repeated experiments which resulted in a more expected improved repellency:
- Exp. 5: Fresh pod (no flame) containing 10g Soy wax and 2% TFL incorporated was tested at 8.4' radius. The pod was placed in a "square lantern" prototype with glass windows (see Figure 1a-c). Repellency of 81% was obtained.
- Exp. 8: Fresh pod (no flame) containing 10g Soy wax and 2% TFL incorporated was tested at 8.4' radius. The pod was placed in a "square lantern" prototype with glass windows (*see* Figure 1a-c). Repellency of 80% was obtained.
- Exp. 9: Pod (no flame) containing 10g Soy wax and 2% TFL incorporated was tested at 8.4' radius. The pod was placed in a "square lantern" prototype with glass windows (holes drilled similar as Exp. 2 and 3). The pod was a 1.5h aged pod. Repellency of 59% was obtained.
- Exp. 10: Fresh pod (no flame) containing 10g Soy wax and 2% TFL incorporated was tested at 8.4' radius. The pod was placed in a "square lantern" prototype with glass windows where the lid raised by 1/8". Repellency of 80% was obtained.

### Conclusion:

- Aging of the pod had an impact on repellency.
- Citronella candle do not have a good efficacy even at high concentration (3% is the max found on the market).
- Air circulation between the part where the heating candle is located and where the pod is not improving. It would be better to keep the 2 parts separate. Also, more precise monitoring of the testing condition was needed.

### Example 9- Initial loading and temperature on the release of TFL

A TGA testing session was run on sample from pods containing pure soy wax with different TFL amounts incorporated: 1) a mixture of 1% TFL in approx. 10-12g soy wax and 2) 3% TFL in approx. 10-12g soy wax. The pods were heated to 3 different temperatures, 120°C, 140°C, and 160°C. The objective was to get an idea of the impact of the initial loading on the release and of the temperature on the release.

The results confirmed the initial results regarding nonlinearity of the TFL release (approx. 10-folds higher release between 120 and 160°C). It was also discovered that working at 160°C instead of 150°C can be even better. Initial loading had a lower impact: 3% has a release 1.5-fold higher vs 1%.

### Example 10- Greenhouse testing using heating candle to check efficacy of amt of TFL/ wax

A 2-month directional testing was performed, all in a greenhouse. An in-house protocol was used (2 CO₂ traps placed at 5' & 15' distance to the tested sample) to check repellency (number of trapped mosquitoes out of 150 released). A cage containing 20 mosquitoes placed near the sample was tested to check the kd and Mo (Checked every 15min from start up to 120min for kd and at 24h for Mo). When possible, dead mosquitoes found in the greenhouse was checked as well (indicative info as it is not always possible to easily find them). A monitoring device to properly monitor and record wax melt temperature was also added. A heating candle was used to heat the pod. The pod was placed in a square lantern (see Figure la-c) for all testing. TFL release rate was controlled by checking the TFL content before and after the testing session.

### Phase 1- Efficacy and potential variability checked.

Exp. 1-3. Fresh pod containing 10g soy wax with 2% TFL incorporated was tested. They were heated to between around 155-205°C as there were a lot of variation for using heating candles. Average Mo of 90% was obtained. Kd took time to occur (only 4 kd at 105 min check) Average trapped mosquitoes: 3.7 in the "5' trap" and 18 in the "15' trap".

Thus, there was a high variation on TFL release: from ≈10 to ≈45mg/h, which was in line with efficacy results: the higher the release, the better the efficacy. These variations are link to the pod temperature variation (due to the heating candle). Thus, optimization of the heating candle and relative positioning of the heating candle to the pod to minimize the melting temp variation would be ideal.

### Phase 2- Impact of the wax quantity (3g vs 10g soy wax) on efficacy tested.

Exp. 4-6: Fresh pod: 3g soy wax and 2% TFL incorporated. They were heated to higher than expected temperatures above around 200°C. Average Mo of 47%. Average trapped mosquitoes: 9 in the "5' trap" and 33 in the "15' trap". TFL release: from ≈18 to ≈35mg/h. One exp. showed amazing results with only 4 and 2 mosquitoes trapped respectively in the "5' trap" and the "15' trap". And 100% kd at 60 min and 100% Mo (none of the previous rep reached such efficacy). Thus, best efficacy clearly link to the highest TFL release (35mg/h and highest pod temp).

Phase 3: Impact of TFL content in 10g wax soy pod heated to 145°C
4 exp.: 2 with 1% TFL incorporated (had to repeat this one as 1^{st} rep gave inconsistent results), 1 with 3% TFL incorporated and 1 with 5% TFL incorporated. All fresh pods.
- At 5%, only 1 mosquito trap in the "5' trap" and 100% kd at 30min. 100% Mo at 24h (best results of all testing).
- At 3%, respectively 6 and 4 trapped mosquitoes in the "5' trap" and "15' trap" and 90% kd reached at 75min. 100% Mo at 24h.
- At 1%, respectively 22 and 57 trapped mosquitoes in the "5' trap" and "15' trap" and 50% kd reached at 120min. 85% Mo at 24h.
Thus, 5% TFL pod efficacy > 3% and 1%. Very different release rate seen at 145°C, 62 and 12 mg/h respectively. 25mg/h was the defined target. Thus, wax melt temperature is key and even higher temperature than 140-150°C can improve results *(see* Figure 8 showing pod wax temperature profile: wherein 1^{st} experiment corresponds to pod G, 2^{nd} experiment corresponds to pod G(2), 3^{rd} experiment corresponds to pod H, and 4^{th} experiment corresponds to pod I (so, G - 1% TFL pod, H - 3% TFL pod, and I corresponds to 5% TFL pod)). Maximum wax melting temperature was around 180°C, which was when wax start to be degraded and generate smoke. Higher content lead to higher release and higher efficacy. No significant impact of wax quantity between 3 and 10g.

### Example 11- Determining optimal operating range and lasting in outdoor greenhouse

Next stage testing narrowed down final formulation with focus on lasting in an outdoor greenhouse (similar setting and protocol as previous session):

Determining the optimal operating range/ aged pods:
The following experiments were performed: 5 exp with 2% TFL incorporated in 10g soy wax (3 exp with fresh pod, 2 exp with 5h aged pod). Mixed results were obtained due to wax melting temp difference. 3 exp reach temp > 200°C. These led to excellent results (kd reaching 100% in 15min and >90% Mo) but the wax was degraded (resulting in smoke and turned black) due to too high temp. This confirmed the optimum wax melt temp profile: 210°C > wax pod temp > 140°C, but preferably 190°C > wax pod temp > 150°C, and even more preferably, 180°C > wax pod temp > 160°C. The temperature peak (over 200°C) can be acceptable (when lighting the candle) but should not last too long (risk of pod wax degradation - generating smoke).

### Conclusion:

- The optimal operating range of 160-180°C for wax melting temperature.
- 2 rep with aged pod show still good repellency level but lower kd / Mo.

### Lasting:

According to results obtained (release rate to get the expected efficacy) a target of 24h lasting was set. Lasting is a balance between: Wax quantity / pod TFL loading / wax melting temperature and heating candle design. Based on that, calculations were done for a pod design for outdoor use of 6% TFL in a 10g soy wax pod (600mg TFL content) (this is equivalent of 25mg/h release during 24h). At 6% TFL is still evenly mixed in the wax and stable. For indoor, 3g soy wax in the pod may be enough. TFL concentration depends on expected lasting (eg. 72mg content can ensure min 24h lasting indoor. Equivalent to 2.5% if 3g pod and 0.75% in lOg pod).

### Example 12 - formulation fine-tuning in semi-field testing (temp stabilization and confirmation of repellency for outdoors)

Last optimization step is focus on temp stabilization and confirmation of the repellency level outdoor. Formulation fine tuning testing was performed for 4 months testing with 103 experiments performed. All testing performed in semi field outdoor in 30'x60'greenhouse (similar setting / protocol as the one used in Example 8. All tests performed with square lantern (see Figure 1a-c) at 8.4' radius (equivalent of a 12x12' area of protection). Most of the exp were done by "pack of 3" at the same time: 4 greenhouses used- 1 as "control" and 3 for testing. This way allows a better reading of the results (especially in case of variation of mosquito activity).

Results- different heating candle type were used for exp. 1-42 leading to temperature variation of wax melting temperature over time which led to mixed results for some of the exp. After exp 42 (till the end) a candle was selected which gave the highest heating stability.
- Exp. 1 to 22: testing with pods containing 2, 3, and 6% TFL incorporated in 10g soy wax. Tests ran from fresh up to 24h lasting. Average repellency of 75% (US EPA threshold) was obtained. Lower efficacy was seen with 2 and 3% TFL pod especially after ageing (With fresh pod, no significant difference). Only 6% TFL pod always achieved the desired above 75% repellency, even up to 24h testing. Confirmation that 6% TFL loading needed to reach the expected efficacy. All next exp. were based on 6% TFL pod.
- Exp. 23-28: Fresh and 10.5h aged 6% TFL pod. Mixed results were obtained. Adjustments needed with the heating candle.
- Exp. 29-34: Fresh and 22.5 h aged 6% TFL pod. All fresh pod achieved above 75% repellency. But only one out of 3 for 22.5h aged pod did.
- Exp. 35-49: Fresh pod, 10.5h aged pod, and 22.5h aged pod containing 6% TFL. In average, just below 75% repellency achieved for fresh (but seems that mosquito activity was not good here), all exp. (6 in total) for 10.5 aged pods achieved above 75% repellency, and 22.5h aged pod achieved 35% repellency.
- Exp. 50-55: Fresh pod and 10.5h aged pod containing 6% TFL. All achieved above 75% for fresh but mixed results for aged ones.
- Exp. 56-64: Fresh pod, 16.5h aged pod, and 22.5h aged pod with 6% TFL were used. Average of 80% repellency obtained for fresh and 76% obtained for 16.5h and 39% for 22.5h. These demonstrated struggles with longer lasting, so ageing time was changed to check for when efficacy is dropping for the next exp.
- Exp. 65-70: 16.5h aged pod and 18.5h aged pod with 6% TFL were used. Average of 79% repellency obtained at 16.5h aged and 62% repellency obtained at 22.5h aged.
- Exp. 71-73: fresh pod (to check mosquito activity) was used. Average of 69% repellency leading to conclusion that mosquito activity was too low. So, the pre melt time was increased to 1h for the next exp.
- Exp. 74-79: 22.5h aged pod was used. Average of 81% repellency was obtained for the 3 first exp. and 37% for the 3 last ones.
- Exp. 80-91: Fresh pod and 22.5h aged pods were used. In average, 82% repellency was obtained on fresh pod and 80% repellency was obtained for the aged ones. Conclusion: all design, setting were finalized to reaching 24h lasting (= testing with 22.5h aged pod).
- Last session of 13 rep with an increase area of protection of 15x15':
   ∘ Exp. 92-98: fresh pod used. 84% average repellency was obtained.
   ∘ Exp. 99-104: 33.5h aged pod. 50% repellency was obtained.

### Experiment 13 - Outdoor field testing for repellency

Outdoor field testing was performed at 2 different locations where mosquitoes pressure is high enough according to US EPA standard (minimum 60 catch by hours). On both sites, testing according to the US EPA review testing protocol (with 15x15' area of protection) was performed. The testing was similar to the semi-field testing with difference that local mosquitoes are caught (no release, no greenhouse). Fresh pod, 16.5h aged pod (equivalent of 18h of use) and 22.5h aged pod (equivalent of 24h of use) containing 6% TFL incorporated in approximately 10g soy wax were tested.

Site 1 and site 2 all tested points above the 75% repellency (even above 88% repellency). This test validated the level of performance for the device.

Therefore, for outdoors (15x15' of protection), approximately 6% TFL incorporated in approximately 10g soy wax pod is preferred to achieve 24h protection.

### Example 14- Using TGA measurements to derive optimum temperature to heat TFL pod

Transfluthrin (TFL) has low vapor pressure *(see* Table 3 below), which means that release can occur at room temperature even without the need for energy use. However, this release is pretty low and can only ensure very limited level of protection, which would not be sufficient for protection for a large area outdoors (10x10', 12x12', 15x15' or more).

**Table 3**

| **Active Ingredient** | **Vapor pressure (mPa @25°C)** | **Molecular Weight (g/mol)** | **Density** | **Melting point (°C)** | **Boiling point (°C)** |
|---|---|---|---|---|---|
| **Empenthrin** | **15,4** | **295,5** | **0,93** | **NA** | **295** |
| **Profluthrin** | **10,3** | **330,3** | **1,19** | **<25** | **323** |
| **Dimefluthrin** | **5,12** | **374,3** | **1,26** | **NA** | **352** |
| **Tetramethrin** | **2,11** | **331,4** | **1,11** | **65** | **544** |
| **Transfluthrin** | **2** | **371,2** | **1,5** | **32** | **242** |
| **Meperfluthrin** | **2** | **371,1** | **1,51** | **32** | **250** |
| **Metofluthrin** | **1,96** | **360,3** | **1,21** | **-54** | **334** |
| **Imiprothrin** | **1,85** | **318,4** | **1,12** | **<25** | **403** |
| **Prallethrin** | **0,6** | **300.4** | **1,03** | **25** | **381** |

For TFL for outdoor use in 15 x 15' area of protection and according to US EPA repellency validated testing protocol, it was estimated (from the equation set forth above) that a release rate around 25mg/h is needed to reach the minimum 75% requested repellency. A higher release rate can give even better performance, but 25 mg/h seems a good balance between minimum needed and associated cost. For TFL indoor use, for a 30m³ room, less than 3mg/h can work well (according to killing protocols usually accepted worldwide).

TGA (Thermal Gravimetric Analysis) for TFL was run, which allows characterization of the release profile of an active ingredient as a function of the temperature. *See* Figures 9A. Such measurement on TFL demonstrated:
- Active ingredient release is not linear. Below 100-110°C, there appears to be very little release, then after that, the higher the temperature, the faster the release.
- While melting temperature for candle wax depends mainly on the type of wax used, the usual range of wax melting temperature is between 50-80°C. Thus, TFL release was pretty low in the range of the "usual candle wax melting temperature", and it was not be possible to get the needed release rate. (which is the reason why TFL was mainly burnt before being released when incorporated directly into a candle). At such a temperature range, it would hardly possible (considering the potential TFL loading into the candle and candle size) to reach a release above 2-3mg/h which is far below our 20-25mg/h needed for outdoor use.
- Based on the TGA measurement, it can be seen that to reach the desired 25 mg/h release rate for TFL, the pod temp should be >130-140°C.

As can be seen from the TGA measurement on 15mg flakes of Transfluthrin technical, measured with a temperature ramp of 3K/min (under continuous N2-flow) (Figure 10A and 10B), the onset of evaporation was around 100°C, with complete evaporation at 255°C (before a typical flame temperature). Hence, at 55°C candle melting temperature, under these TGA conditions, the TFL evaporation rate was less than (15mg^{∗}0.02/10h=) 0.03mg/h. This amount is much lower than the desired 25 mg/h release rate.

Such measurement had been done with 15mg TFL technical. Increasing the quantity of TFL could increase the release but would not be realistic for consumer product design (safety / cost). The consequence is, if the TFL is loaded into wax under a "traditional" candle design, a large quantity will be burn before been released.
- Example: Considering a tea light candle which contains approximatively 12g of wax and lasting approximatively 4h, to reach expected efficacy, about 100mg of TFL will be needed (4h lasting x 25mg of TFL to be released by h)

By scaling up the results obtained with a TGA measurement, it is considered that only 0.2 mg out of the 100mg will be released. So more than 99% will be consumed and burnt by the flame.

A different way of incorporating TFL was tried by having only one part of the wax (part not in contact with the wick / flame) containing TFL. But as soon as the total surface is melted, all parts are mix together, and the same problems occurred (burning, not enough released, etc). So, it was determined that incorporating TFL into the wax for use as a "normal candle" is not practical to achieve the desired TFL release rate.

However, by using the device discussed herein with the claimed design and positioning (i.e., by having a holder adapted to receive a pod comprising a composition containing at least one air treatment substance), the pod temperature was capable of being heated to >130-140°C and below 170-190°C (because at such temp, wax start to be degraded and generate smoke). So by having TGA measurement, the optimum pod operating temperature was able to be deduced, and by using the device discussed herein, the optimum pod operating temperature was able to be reached.

### SPECIFIC EMBODIMENTS

The following specific embodiments are disclosed. The list of embodiments should not be considered limiting:
1. A device for dispensing at least one air treatment substance comprising a top portion and a housing, wherein the housing comprises: a base, and at least one side portion, wherein the at least one side portion is disposed between the base and the top portion, and wherein the device has an interior space that is at least partially enclosed by the housing; wherein the housing is configured to receive a heat source on or above a top surface of the base of the housing; wherein the device further comprises a holder that is configured to receive a composition comprising at least one air treatment substance; and wherein the device is further configured to receive the heat source and the composition such that the heat source can apply heat to the composition.
2. A device for dispensing at least one air treatment substance comprising a top portion and a housing, wherein the housing comprises: a base comprising a heat source, and
   at least one side portion, wherein the at least one side portion is disposed between the base and the top portion, and wherein the device has an interior space that is at least partially enclosed by the housing; wherein the device further comprises a holder that is configured to receive a composition comprising at least one air treatment substance; and
   wherein the device is further configured to receive the composition such that the heat source can apply heat to the composition.
3. A device for dispensing at least one air treatment substance comprising a top portion and a housing, wherein the housing comprises at least one side portion, wherein the at least one side portion is disposed between an exterior surface and the top portion when the device is placed on the exterior surface, and wherein the device has an interior space that is at least partially enclosed by the housing; wherein the device further comprises a holder that is configured to receive a composition comprising at least one air treatment substance; and wherein the device is further configured to receive the composition such that a heat source placed on the exterior surface can apply heat to the composition.
4. The device according to any of embodiments 1, 2 or 3, wherein the interior space of the device is at least partially enclosed by the housing and the top portion.
5. The device according to embodiments 1 or 2, wherein the holder is above the base of the housing.
6. The device according to embodiment 3, wherein the holder is above the exterior surface when the device is placed on the exterior surface.
7. The device of embodiment 1 or 2, wherein the housing is configured to receive the heat source between the holder and the base of the housing.
8. The device of any of embodiments 1 or 2, wherein the holder is positioned between the top portion and the base of the housing.
9. The device of embodiment 3, wherein the holder is positioned between the top portion and the exterior surface when the device is placed on the exterior surface.
10. The device of any of embodiments 1-9, wherein the at least one side portion comprises a door or an opening for access to the interior space of the device.
11. The device of any of embodiments 1-10, wherein the housing comprises at least two side portions.
12. The device of any of embodiments 1-10, wherein the housing comprises at least four side portions.
13. The device of any of embodiments 1-12, wherein the top portion is fixed to the housing.
14. The device of any of embodiments 1-12, wherein the top portion is removable from the housing.
15. The device of any of embodiments 1-14, wherein the top portion is situated to block or inhibit a vertical flow of the at least one air treatment substance from the composition received by the holder when the composition is heated.
16. The device of any of embodiments 1-15, further comprising at least one side opening in the top portion and/or the at least one side portions that allows or directs a lateral or horizontal flow of the at least one air treatment substance through the at least one side opening.
17. The device of embodiment 16, wherein the top portion comprises the at least one side opening.
18. The device of embodiment 16, wherein the at least one side portion of the housing comprises the at least one side opening.
19. The device of any of embodiments 16-18, wherein the at least one side opening is situated or positioned above and/or laterally from the holder configured to receive the composition comprising the at least one air treatment substance.
20. The device of any of embodiments 1-19, wherein the holder is connected to one or more side portions of the housing.
21. The device of any of embodiments 1-19, wherein the holder spans between one or more side portions of the housing.
22. The device of any of embodiments 1-19, wherein the holder spans between two or more side portions of the housing.
23. The device of any of embodiments 1-19, wherein the holder is connected to the top portion.
24. The device of any of embodiments 1-23, wherein the holder comprises an aperture or recess shaped to receive and hold a pod comprising a container and the composition disposed in the container.
25. The device according to embodiment 24, wherein the holder comprises a plate or sheet surrounding the aperture or recess.
26. The device of embodiment 24, wherein the aperture or recess of the holder is round, square, or other shape.
27. The device of any of embodiments 1-26, wherein the holder is a metal, plastic, or ceramic material.
28. The device of any of embodiments 1-2, further comprising a second holder suspended above the top surface of the base and configured to receive the heat source.
29. The device of embodiment 3, further comprising a second holder suspended above the exterior surface when the device is placed on the exterior surface and configured to receive the heat source.
30. The device according to embodiment 28, wherein the second holder is positioned between the first holder and the base of the housing.
31. The device according to embodiment 29, wherein the second holder is positioned between the first holder and the exterior surface when the device is placed on the exterior surface.
32. The device of any of embodiments 28-31, wherein the second holder is connected to one or more side portions of the housing.
33. The device of any of embodiments 28-32, wherein the second holder comprises an aperture or recess shaped to receive and hold the heat source.
34. The device according to embodiment 33, wherein the second holder further comprises plate or sheet surrounding the aperture or recess.
35. The device of embodiment 33, wherein the aperture or recess of the second holder is round, square, or any other desired shape.
36. The device of any of embodiments 28-35, wherein the second holder is a metal, plastic, or ceramic material.
37. The device of any of embodiments 1-36, further comprising the heat source.
38. The device of any of embodiments 1 or 2, wherein the top surface of the base of the housing comprises a recess shaped to receive the heat source.
39. The device of any of embodiments 1-38, wherein the device is configured to receive the heat source and the composition such that the heat source applies a sufficient amount of heat to the composition to release the air treatment substance into the surrounding air.
40. The device of any of embodiments 1-39, wherein the device is configured to receive the heat source and the composition such that the heat source applies a sufficient amount of heat to the composition to produce a desired release rate of the air treatment substance.
41. The device of any of embodiments 1-40, wherein the device is configured to receive the heat source and the composition such that the distance between the heat source and the composition is in a range from about 0 mm to about 100mm.
42. The device of any of embodiments 1-40, wherein the device is configured to receive the heat source and the composition such that the distance between the heat source and the composition is in a range from about 1 mm to about 80 mm.
43. The device of any of embodiments 1-40, wherein the device is configured to receive the heat source and the composition such that the distance between the heat source and the composition is in a range from about 5 mm to about 80 mm.
44. The device of any of embodiments 1-40, wherein the device is configured to receive the heat source and the composition such that the distance between the heat source and the composition is in a range from about 10 mm to about 80 mm.
45. The device of any of embodiments 1-40, wherein the device is configured to receive the heat source and the composition such that the distance between the heat source and the composition is in a range from about 5 to 15 mm.
46. The device of any of embodiments 1-40, wherein the device is configured to receive the heat source and the composition such that the distance between the heat source and the composition is in a range from about 20 mm to about 60 mm.
47. The device of any of embodiments 39-46, wherein the heat source heats the composition comprising at least one air treatment substance to a temperature of about 50-300°C.
48. The device of any of embodiments 39-46, wherein the heat source heats the composition comprising at least one air treatment substance to a temperature of about 100-250°C.
49. The device of any of embodiments 39-46, wherein the heat source heats the composition comprising at least one air treatment substance to a temperature of about 140°C - 220°C.
50. The device of any of embodiments 39-46, wherein the heat source heats the composition comprising at least one air treatment substance to a temperature of about 150°C - 190°C.
51. The device of any of embodiments 1-50, wherein the distance between the area configured to receive the heat source and the holder is adjustable.
52. The device of any of embodiments 1-51, wherein the heat source is disposed in a heating container.
53. The device of embodiment 52, wherein the heating container is made of a material selected from the group consisting of glass, ceramic, metal, and plastic.
54. The device of any one of embodiments 1-53, wherein the heat source is disposable.
55. The device of any of embodiments 1-54, wherein the heat source is electrically powered, battery-powered, gas-powered, or a candle.
56. The device of any of embodiments 1-55, wherein the heat source is a candle comprising at least one wick.
57. The device of embodiment 56, wherein the candle comprises a wax selected from the group consisting of soy, paraffin, petrolatum, gel, beeswax, and colza palmwax, or any combination thereof.
58. The device of embodiment 56, wherein the candle is made of wax selected from the group consisting of soy and paraffin, or a combination thereof.
59. The device of any of embodiments 56-58, wherein the at least one wick is made of a material selected from the group consisting of a zinc core, paper core, CD, HTTP, LX, Wooden, RRD, and cotton, or a combination thereof.
60. The device of any of embodiments 56-58, wherein the wick is made of a zinc core.
61. The device of any of embodiments 56-60, wherein the diameter of the at least one wick is in a range from about 0.2 to about 10 mm.
62. The device of any of embodiments 56-60, wherein the diameter of the at least one wick is in a range from about 0.5 to about 2 mm.
63. The device of any of embodiments 56-62, wherein the candle comprises 8-590 g of wax.
64. The device of any of embodiments 56-62, wherein the candle comprises 100-150g wax.
65. The device of any of embodiments 56-64, wherein the candle further comprises one or more additives selected from the group consisting of a fragrance, an essential oil, a release enhancer, a dye, or titanium dioxide (TiO2).
66. The device of any of embodiments 56-64, wherein the candle further comprises citronella.
67. The device of embodiment 24, wherein the pod is disposable.
68. The device of embodiment 67, wherein the pod further comprises a cover on top of the composition.
69. The device of any of embodiments 67-68, wherein the pod container is or comprises a material selected from the group consisting of aluminum, steel, alloy, and copper.
70. The device of any of embodiments 67-68, wherein the pod container is aluminum.
71. The device of any of embodiments 67-70, wherein the pod is round, square, or other shape.
72. The device of any of embodiments 1-71, wherein the composition comprises the at least one air treatment substance, a matrix, and optionally at least one additive, wherein the matrix comprises an inert solid substance, and wherein the matrix is optionally immiscible with the at least one air treatment substance
73. The device of embodiment 72, wherein the matrix partially or fully melts above 50°C, above 60°C, above 70°C, above 80°C, above 90°C, or above 100°C.
74. The device of embodiment 72-73, wherein the composition comprises the at least one additive, and wherein the at least one additive is selected from the group consisting of a fragrance, citronella oil, dye, essential oil, lavender oil, stearine, and release enhancer, optionally in an amount of about 0.1-4%.
75. The device of any of embodiments 67-74, wherein the pod container comprises at least two different compartments.
76. The device of embodiment 75, wherein each compartment of the pod container comprises (i) the at least one air treatment substance and the matrix, or (ii) the at least one additive.
77. The device of any of embodiments 72-76, wherein the matrix comprises a wax, cellulose mat, sand core, or binder resin substrate, or a mixture thereof.
78. The device of any of embodiments 72-76, wherein the matrix comprises a wax.
79. The device of any of embodiments 72-76, wherein the matrix comprises a wax made of soy, paraffin, petrolatum, gel, beeswax, colza palmwax, or a combination thereof.
81. The device of any of embodiments 72-76, wherein the matrix comprises a wax made of a soy wax, paraffin wax, or a blend thereof.
82. The device of any of embodiments 72-76, wherein the matrix comprises a soy wax.
83. The device of any of embodiments 72-82, wherein the matrix can at least partially melt above 50 °C and/or comprises 0.5 to 50g of wax.
84. The device of embodiment 83, wherein the matrix comprises about 0.5g to 20g of wax.
85. The device of embodiment 83, wherein the matrix comprises about 1g to 15g of wax.
86. The device of any of embodiments 1-85, wherein the at least one air treatment substance is selected from the group consisting of a volatile pest control active ingredient, fragrance, natural essential oil, deodorizer, allergen control ingredient, disinfectant, and sanitizer.
87. The device of any of embodiments 1-85, wherein the at least one air treatment substance is a pest control active ingredient.
88. The device of any of embodiments 1-85, wherein the at least one air treatment substance is selected from the group consisting of an organic phosphorous insecticide, natural repellent, citronella oil, natural pyrethrin, pyrethrum extract, and synthetic pyrethroid, or a combination thereof.
89. The device of any of embodiments 1-85, wherein the at least one air treatment substance is a pyrethroid.
90. The device of any of embodiments 1-85, wherein the at least one air treatment substance is selected from the group consisting of dimefluthrin, profluthrin, transfluthrin, furamethrin, metofluthrin, allethrin, prallethrin, phenothrin, permethrin, meperfluthrin, momfluorothrin, flumethrin, imiprothrin, and tetramethrin, or a combination thereof.
91. The device of any of embodiments 1-85, wherein the at least one air treatment substance is selected from the group consisting of transfluthrin, metofluthrin, prallethrin, meperfluthrin, dimefluthrin, and momfluorothrin, or a combination thereof.
92. The device of any of embodiments 1-85, wherein the at least one air treatment substance is allethrin, metofluthrin, or transfluthrin, or a combination thereof.
93. The device of any of embodiments 1-92, wherein the composition comprises a matrix, wherein the concentration of the at least one air treatment substance in the composition is about 0.01% to 75%, wherein such percentage is defied as the amount or mass of the air treatment substance divided by the amount or mass of the matrix.
94. The device of any of embodiments 1-93, wherein the concentration of the at least one air treatment substance is about 0.03-20%.
95. The device any of embodiments 1-93, wherein the concentration of the at least one air treatment substance is about 0.04-10%.
96. The device of any of embodiments 1-95, wherein the composition further comprises a matrix comprising a wax, wherein the composition comprises about 2mg-2g of the air treatment substance and about 0.5g-50g of the wax.
97. The device of any of embodiments 96, wherein the composition comprises about 10mg - 1g of the air treatment substance and about 5g-25g of the wax.
98. The device of embodiment 16-97, wherein the at least one air treatment substance flows out of the device through the at least one side opening into a desired treatment area surrounding the device, such desired treatment area being within about 0 to 3 meters above the ground.
99. The device of any of embodiments 1-98, further comprising a fan, wherein the fan increases the amount of the at least one air treatment substance to flow through the at least one side opening of the device.
100. The device of any of embodiments 1-99, wherein the top portion is made of a material selected from the group consisting of metal, plastic, polymer, glass, ceramic, and alloy.
101. The device of any of embodiments 1-99, wherein the top portion is made of a material selected from metal, plastic, and ceramic.
102. The device of any of embodiments 1-101, wherein the inner surface of the top portion is flat, convex, or concave, and/or wherein the top portion of the device is round, square, or any other simple or complex shape.
103. The device of any of embodiments 1-101, wherein the inner surface of the top portion is convex and/or has a round or square shape.
104. The device of any of embodiments 1-103, wherein the holder and/or the second holder comprises a metal, plastic, or ceramic material.
105. The device of any of embodiments 1-104, wherein the at least one side portion comprises a mesh structure.
106. The device of any of embodiments 1-104, wherein the at least one side portion comprises a wall structure.
107. The device of embodiment 106, wherein the one wall structure comprises a material selected from the group consisting of metal, alloy, polycarbonate, ceramic, glass, and plastic, or a combination thereof.
108. The device of any of embodiments 1-107, wherein the at least one side portion comprises a door or a window.
109. The device of any of embodiments 1-108, wherein the housing has a cylindrical shape or a shape defined by four to eight side portions.
110. The device of any of embodiments 1-109, wherein the housing comprises a metal, plastic, glass or ceramic material.
111. The device of any of embodiments 1- 110, wherein the housing has a rectangular, square, polygonal, round, or circular shape.
112. A method of using the device of any of embodiments 1-111 to release the at least one air treatment substance into the surrounding air to repel and/or kill at least one target pest by heating the composition disposed in the holder with the heat source to achieve a release of the air treatment substance.
113. The method of embodiment 112, wherein the composition is heated to a target temperature or a target temperature range to cause a desired rate of release of the air treatment substance from the composition into the surrounding air.
114. A method for releasing at least one air treatment substance comprising:
   (a) placing a heat source in an interior space of a device, the device comprising a top portion and a housing, wherein the housing comprises at least one side portion, wherein the at least one side portion is disposed between the top portion and a base, wherein the interior space of the device is at least partially enclosed by the housing, wherein the device further comprises a holder that is configured to receive a composition comprising the at least one air treatment substance, and wherein the device is further configured to receive the heat source and the composition such that the heat source can apply heat to the composition; and
   (b) heating the composition comprising the at least one air treatment substance with heat from the heat source to cause a release of the at least one air treatment substance into the surrounding air.
115. The method of embodiment 114, further comprising:
   (c) placing a pod in the holder of the device, the pod comprising a pod container and a composition disposed in the container, wherein the composition comprises the at least one air treatment substance,
   wherein step (c) is performed before, during or after step (a) but before step (b).
116. The method of embodiment 114, wherein the device further comprises a pod in the holder of the device, the pod comprising the composition comprising the at least one air treatment substance.
117. A method for releasing at least one air treatment substance comprising:
   (a) placing a pod in a holder of a device, the pod comprising a pod container and a composition disposed in the container, wherein the composition comprises the at least one air treatment substance, the device comprising a top portion and a housing, wherein the housing comprises at least one side portion, wherein the at least one side portion is disposed between the top portion and an external surface when the device is placed upright on the exterior surface, wherein the housing is configured to receive a heat source on or above a top surface of the base of the housing, wherein the interior space of the device is at least partially enclosed by the housing, and wherein the device is further configured to receive the heat source and the pod such that the heat source can apply heat to the pod; and
   (b) heating the composition comprising the at least one air treatment substance with heat from the heat source to cause a release of the at least one air treatment substance into the surrounding air.
118. The method according to embodiment 114, wherein step (a) comprises placing the heat source on or above a top surface of the base of the housing.
119. The method according to embodiment 117, wherein step (a) comprises placing the heat source on or above the exterior surface.
120. The method according to embodiment 117, wherein the device further comprises a second holder positioned between the holder and the exterior surface when the device is placed upright on the exterior surface, and wherein step (a) comprises placing the heat source in the second holder of the device.
121. The method of embodiment 114, wherein the second holder is positioned between the holder and the base of the housing, and wherein step (a) comprises placing the heat source in the second holder of the device.
122. The method according to any of embodiments 114-121, wherein the interior space of the device is at least partially enclosed by the housing and the top portion.
123. The method of any of embodiment 114, wherein the holder is above the base of the housing.
124. The method of embodiment 114, wherein the housing is configured to receive the heat source between the holder and the base of the housing.
125. The method of embodiment 114, wherein the holder is positioned between the top portion and the base of the housing.
126. The method according to embodiment 117, wherein the holder is positioned above the exterior surface and/or between the top portion and the exterior surface, when the device is placed on the exterior surface.
127. The method of any of embodiments 112-126, wherein the composition is heated to a temperature within a temperature range in which the matrix of the composition melts to allow for the release of the air treatment substance but does not cause significant degradation of the air treatment substance.
128. The method of any of embodiments 112-127 wherein the at least one side portion comprises a door or an opening for access to the interior space of the device.
129. The method of any of embodiments 112-127, wherein the housing comprises at least two side portions.
130. The method of any of embodiments 112-127, wherein the housing comprises at least four side portions.
131. The method of any of embodiments 112-130, wherein the top portion is fixed to the housing.
132. The method of any of embodiments 112-131, wherein the top portion is removable from the housing.
133. The method of any of embodiments 112-132, wherein the top portion is situated to block or inhibit a vertical flow of the at least one air treatment substance from the composition received by the holder when the composition is heated.
134. The method of any of embodiments 112-133, further comprising at least one side opening in the top portion and/or the at least one side portions that allows or directs a lateral or horizontal flow of the at least one air treatment substance through the at least one side opening.
135. The method of embodiment 134, wherein the top portion comprises the at least one side opening.
136. The method of embodiment 134, wherein the at least one side portion of the housing comprises the at least one side opening.
137. The method of any of embodiments 134-136, wherein the at least one side opening is situated or positioned above and/or laterally from the holder configured to receive the composition comprising the at least one air treatment substance.
138. The method of any of embodiments 114-137, wherein the holder is connected to one or more side portions of the housing.
139. The method of any of embodiments 114-137, wherein the holder spans between one or more side portions of the housing.
140. The method of any of embodiments 114-137, wherein the holder spans between two or more side portions of the housing.
141. The method of any of embodiments 114-137, wherein the holder is connected to the top portion.
142. The method of any of embodiments 114-141, wherein the holder comprises an aperture or recess shaped to receive and hold a pod comprising a container and the composition disposed in the container.
143. The method according to embodiment 142, wherein the holder comprises a plate or sheet surrounding the aperture or recess.
144. The method of embodiment 142, wherein the aperture or recess of the holder is round, square, or other shape.
145. The method of any of embodiments 114-144, wherein the holder is a metal, plastic, or ceramic material.
146. The method of embodiment 114, further comprising a second holder suspended above the top surface of the base and configured to receive the heat source.
147. The method of embodiment 117, further comprising a second holder suspended above the exterior surface when the device is placed on the exterior surface and configured to receive the heat source.
148. The method according to embodiment 146, wherein the second holder is positioned between the first holder and the base of the housing.
149. The method according to embodiment 147, wherein the second holder is positioned between the first holder and the exterior surface when the device is placed on the exterior surface.
150. The method of any of embodiments 146-149, wherein the second holder is connected to one or more side portions of the housing.
160. The method of any of embodiments 146-150, wherein the second holder comprises an aperture shaped to receive and hold the heat source.
161. The method according to embodiment 160, wherein the second holder further comprises plate or sheet surrounding the aperture or recess.
162. The method of embodiment 160, wherein the aperture or recess of the second holder is round, square, or any other desired shape.
163. The method of any of embodiments 146-162, wherein the second holder is a metal, plastic, or ceramic material.
164. The method of any of embodiments 114-164, further comprising the heat source.
165. The method of embodiment 114, wherein the top surface of the base of the housing comprises a recess shaped to receive the heat source.
166. The method of any of embodiments 114-165, wherein the device is configured to receive the heat source and the composition such that the distance between the heat source and the composition is in a range from about 0 mm to about 100mm.
167. The method of any of embodiments 114-165, wherein the device is configured to receive the heat source and the composition such that the distance between the heat source and the composition is in a range from about 1 mm to about 80 mm.
168. The method of any of embodiments 114-165, wherein the device is configured to receive the heat source and the composition such that the distance between the heat source and the composition is in a range from about 5 mm to about 80 mm.
169. The method of any of embodiments 114-165, wherein the device is configured to receive the heat source and the composition such that the distance between the heat source and the composition is in a range from about 10 mm to about 80 mm.
170. The method of any of embodiments 114-165, wherein the device is configured to receive the heat source and the composition such that the distance between the heat source and the composition is in a range from about 20 mm to about 80 mm.
171. The method of any of embodiments 114-165, wherein the device is configured to receive the heat source and the composition such that the distance between the heat source and the composition is in a range from about 20 mm to about 60 mm.
172. The method of any of embodiments 114-171, wherein the heat source heats the composition comprising at least one air treatment substance to a temperature of about 50-300°C.
173. The method of any of embodiments 114-171, wherein the heat source heats the composition comprising at least one air treatment substance to a temperature of about 100-250°C.
174. The method of any of embodiments 114-171, wherein the heat source heats the composition comprising at least one air treatment substance to a temperature of about 140°C - 220°C.
175. The method of any of embodiments 114-171, wherein the heat source heats the composition comprising at least one air treatment substance to a temperature of about 150°C - 190°C.
176. The method of any of embodiments 114-175, wherein the distance between the area configured to receive the heat source and the holder is adjustable.
177. The method of any of embodiments 114-176, wherein the heat source is disposed in a heating container.
178. The method of embodiment 177, wherein the heating container is made of a material selected from the group consisting of glass, ceramic, metal, and plastic.
179. The method of any one of embodiments 114-178, wherein the heat source is disposable.
180. The method of any of embodiments 114-179, wherein the heat source is electrically powered, battery-powered, gas-powered, or a candle.
181. The method of any of embodiments 114-180, wherein the heat source is a candle comprising at least one wick.
182. The method of embodiment 181, wherein the candle comprises a wax selected from the group consisting of soy, paraffin, microcrystalline, petrolatum, gel, beeswax, and colza palmwax, or any combination thereof.
183. The method of embodiment 181, wherein the candle is made of wax selected from the group consisting of soy and paraffin, or a combination thereof.
184. The embodiment of any of embodiments 181-183, wherein the at least one wick is made of a material selected from the group consisting of a zinc core, paper core, CD, HTTP, LX, Wooden, RRD, and cotton, or a combination thereof.
185. The method of any of embodiments 181-184, wherein the wick is made of a zinc core.
186. The method of any of embodiments 181-185, wherein the diameter of the at least one wick is in a range from about 0.2 to about 10 mm.
187. The method of any of embodiments 181-185, wherein the diameter of the at least one wick is in a range from about 0.5 to about 2 mm.
188. The method of any of embodiments 181-187, wherein the candle comprises 8-590 g of wax.
189. The method of any of embodiments 181-187, wherein the candle comprises 100-150g wax.
190. The method of any of embodiments 181-187, wherein the candle further comprises one or more additives selected from the group consisting of a fragrance, an essential oil, a release enhancer, a dye, or titanium dioxide (TiO2).
191. The method of any of embodiments 181-190, wherein the candle further comprises citronella.
192. The method of embodiment 152, wherein the pod is disposable.
193. The method of any of embodiments 192, wherein the pod further comprises a cover on top of the composition.
194. The method of any of embodiments 192-193, wherein the pod container is or comprises a material selected from the group consisting of aluminum, steel, alloy, and copper.
195. The method of any of embodiments 192-193, wherein the pod container is aluminum.
196. The method of any of embodiments 192-195, wherein the pod is round, square, or other shape.
197. The method of any of embodiments 114-196, wherein the composition comprises the at least one air treatment substance, a matrix, and optionally at least one additive, wherein the matrix comprises an inert solid substance, and wherein the matrix is optionally immiscible with the at least one air treatment substance
198. The method of embodiment 197 , wherein the matrix partially or fully melts above 50°C, above 60°C, above 70°C, above 80°C, above 90°C, or above 100°C.
199. The method of embodiment 197, wherein the composition comprises the at least one additive, and wherein the at least one additive is selected from the group consisting of a fragrance, citronella oil, dye, essential oil, lavender oil, stearine, and release enhancer, optionally in an amount of about 0.1-4%.
200. The method of any of embodiments 194-199, wherein the pod container comprises at least two different compartments.
201. The method of embodiment 200, wherein each compartment of the pod container comprises (i) the at least one air treatment substance and the matrix, or (ii) the at least one additive.
202. The method of any of embodiments 197-201, wherein the matrix comprises a wax, cellulose mat, sand core, or binder resin substrate, or a mixture thereof.
203. The method of any of embodiments 197-201, wherein the matrix comprises a wax.
204. The method of any of embodiments 197-201, wherein the matrix comprises a wax made of soy, paraffin, microcrystalline, petrolatum, gel, beeswax, colza palmwax, or a combination thereof.
205. The method of any of embodiments 197-201, wherein the matrix comprises a wax made of a soy wax, paraffin wax, or a blend thereof.
206. The method of any of embodiments 197-201, wherein the matrix comprises a soy wax.
207. The method of any of embodiments 197-206, wherein the matrix can at least partially melt above 50 °C and/or comprises 0.5 to 50g of wax.
208. The method of embodiment 197, wherein the matrix comprises about 0.5g to 20g of wax.
209. The method of embodiment 197, wherein the matrix comprises about 1g to 15g of wax.
210. The method of any of embodiments 114-209, wherein the at least one air treatment substance is selected from the group consisting of a volatile pest control active ingredient, fragrance, natural essential oil, deodorizer, allergen control ingredient, disinfectant, and sanitizer.
211. The method of any of embodiments 114-209, wherein the at least one air treatment substance is a pest control active ingredient.
212. The method of any of embodiments 114-209, wherein the at least one air treatment substance is selected from the group consisting of an organic phosphorous insecticide, natural repellent, citronella oil, natural pyrethrin, pyrethrum extract, and synthetic pyrethroid, or a combination thereof.
213. The method of any of embodiments 114-209, wherein the at least one air treatment substance is a pyrethroid.
214. The method of any of embodiments 114-209, wherein the at least one air treatment substance is selected from the group consisting of dimefluthrin, profluthrin, transfluthrin, furamethrin, metofluthrin, allethrin, prallethrin, phenothrin, permethrin, meperfluthrin, momfluorothrin, flumethrin, imiprothrin, and tetramethrin, or a combination thereof.
215. The method of any of embodiments 114-209, wherein the at least one air treatment substance is selected from the group consisting of transfluthrin, metofluthrin, prallethrin, meperfluthrin, dimefluthrin, and momfluorothrin, or a combination thereof.
216. The method of any of embodiments 114-209, wherein the at least one air treatment substance is allethrin, metofluthrin, or transfluthrin, or a combination thereof.
217. The method of any of embodiments 114-216, wherein the composition comprises a matrix, wherein the concentration of the at least one air treatment substance in the composition is about 0.01% to 75%, wherein such percentage is defined as the amount or mass of the air treatment substance divided by the amount or mass of the matrix.
218. The method of any of embodiments 114-217, wherein the concentration of the at least one air treatment substance is about 0.03-20%.
219. The method of any of embodiments 114-217, wherein the concentration of the at least one air treatment substance is about 0.04-10%.
220. The method of any of embodiments 114-217, wherein the composition further comprises a matrix comprising a wax, wherein the composition comprises about 2mg-2g of the air treatment substance and about 0.5g-50g of the wax.
221. The method of any of embodiments 114-217, wherein the composition comprises about 10mg -1g of the air treatment substance and about 5g-25g of the wax.
222. The method of any of embodiments 114-221, wherein the at least one air treatment substance flows out of the device through the at least one side opening into a desired treatment area surrounding the device, such desired treatment area being within about 0 to 3 meters above the ground.
223. The method of any of embodiments 114-222, further comprising a fan, wherein the fan increases the amount of the at least one air treatment substance to flow through the at least one side opening of the device.
224. The method of any of embodiments 114-223, wherein the top portion is made of a material selected from the group consisting of metal, plastic, polymer, glass, ceramic, and alloy.
225. The method of any of embodiments 114-223, wherein the top portion is made of a material selected from metal, plastic, and ceramic.
226. The method of any of embodiments 114-225, wherein the inner surface of the top portion is flat, convex, or concave, and/or wherein the top portion of the device is round, square, or any other simple or complex shape.
227. The method of any of embodiments 114-225, wherein the inner surface of the top portion is convex and/or has a round or square shape.
228. The method of any of embodiments 114-227, wherein the holder and/or the second holder comprises a metal, plastic, or ceramic material.
229. The method of any of embodiments 114-228, wherein the at least one side portion comprises a mesh structure.
230. The method of any of embodiments 114-228, wherein the at least one side portion comprises a wall structure.
231. The method of embodiment 230, wherein the one wall structure comprises a material selected from the group consisting of metal, alloy, polycarbonate, ceramic, glass, and plastic, or a combination thereof.
232. The method of any of embodiments 114-231, wherein the at least one side portion comprises a door or a window.
233. The method of any of embodiments 114-232, wherein the housing has a cylindrical shape or a shape defined by four to eight side portions.
234. The method of any of embodiments 114-233, wherein the housing comprises a metal, plastic, glass or ceramic material.
235. The method of any of embodiments 114-234, wherein the housing has a rectangular, square, polygonal, round, or circular shape.
236. The method according to any of embodiments 114-235, comprising dispersing the at least one air treatment substance indoors or outdoors.
237. The method according to any of embodiments 114-235, comprising dispersing transfluthrin outdoors, wherein the relative concentration of the formulation of the pod is 5-15% concentration of transfluthrin in 2-15g wax, and the desired transfluthrin release rate is 10-50 mg/h.
238. The method according to any of embodiments 114-235, comprising dispersing metofluthrin outdoors, wherein the relative concentration of the formulation of the pod is 0.01-10% concentration of metofluthrin in 2-15g wax, and the desired metofluthrin release rate is 5-50 mg/h.
239. The method according to any of embodiments 114-235, comprising dispersing allethrin outdoors, wherein the relative concentration of the formulation of the pod is 10-25% concentration of metofluthrin in 2-15g wax, and the desired metofluthrin release rate is 0.1-0.3 g/h.
240. The method according to any of embodiments 114-235, comprising dispersing transfluthrin indoors, wherein the relative concentration of the formulation of the pod is 0.5-5% concentration of transfluthrin in 2-15g wax, and the desired transfluthrin release rate is 0.055-2.7 mg/h.
241. The method according to any of embodiments 114-235, comprising dispersing metofluthrin indoors, wherein the relative concentration of the formulation of the pod is 0.01-10% concentration of metofluthrin in 2-15g wax, and the desired metofluthrin release rate is 0.01-1 mg/h.
242. The method according to any of embodiments 114-235, comprising dispersing allethrin outdoors, wherein the relative concentration of the formulation of the pod is 10-25% concentration of metofluthrin in 2-15g wax, and the desired metofluthrin release rate is 1-30 mg/h.
243. The method according to any of embodiments 114-242, wherein the repellency or kill rate of at least one target pest is 75%.
244. The method according to any of embodiments 114-243, wherein the at least one target pest is repelled or killed at a rate of 75% for at least 60 hours for outdoor use or at least 1000 hours for indoor use.
245. The method according to any of embodiments 114-243, wherein the at least one target pest is repelled or killed at a rate of 75% for at least 30 hours for outdoor use.
246. The method according to any of embodiments 114-243, wherein the at least one target pest is repelled or killed at a rate of 75% for at least 24 hours for outdoor use.
247. The method according to any of embodiments 114-245, wherein the at least one target pest is mosquito.
248. A method of determining a desired air concentration of an air treatment substance for a target pest(s):
   (a) determining a desired air treatment substance release rate = desired air concentration of air treatment substance x volume to be protected,
   (d) running a Thermal Gravimetric Analysis (TGA) measurement on the air treatment substance, and
   (e) defining the optimum pod operating temperature in order to obtain the desired air treatment substance release rate based on the TGA measurement.
249. A kit comprising the device of any of embodiments 1-111, 1-5 disposable pods, and 1-5 disposable heat sources.
250. Use of the device according to any of embodiments 1-111 to repel and/or kill a pest in an indoor or outdoor area.
251. Use of the device according to any of embodiments 1-111 to repel and/or kill mosquitos in an indoor or outdoor area.
252. A composition comprising a matrix and at least one air treatment substance, wherein the matrix comprises an inert solid substance that can at least partially melt and release the air treatment substance into the surrounding air at or above 50 °C.
253. The composition of embodiment 252, wherein the matrix partially or fully melts above 60°C, above 70°C, above 80°C, above 90°C, or above 100°C.
254. The composition of any of embodiments 252-253, wherein the inert solid substance is immiscible with the at least one air treatment substance.
255. The composition of any of embodiments 252-254 further comprising at least one additive.
256. The composition of embodiment 255, and wherein the at least one additive is selected from the group consisting of a fragrance, citronella oil, dye, essential oil, lavender oil, stearine, and release enhancer, optionally in an amount of about 0.1-4%.
257. The composition of any of embodiments 252-256, wherein the matrix comprises a wax, cellulose mat, sand core, or binder resin substrate, or a mixture thereof.
258. The composition of any of embodiments 252-257, wherein the matrix comprises a wax.
259. The composition of any of embodiments 252-257, wherein the matrix comprises a wax made of soy, paraffin, microcrystalline, petrolatum, gel, beeswax, colza palmwax, or a combination thereof.
260. The composition of any of embodiments 252-257, wherein the matrix comprises a wax made of a soy wax, paraffin wax, or a blend thereof.
261. The composition of any of embodiments 252-257, wherein the matrix comprises a soy wax.
262. The composition of any of embodiments 252-261, wherein the matrix comprises 0.5 to 50g of wax.
263. The composition of any of embodiments 252-261, wherein the matrix comprises about 0.5g to 20g of wax.
264. The composition of any of embodiments 252-261, wherein the matrix comprises about 1g to 15g of wax.
265. The composition of any of embodiments 252-264, wherein the at least one air treatment substance is selected from the group consisting of a volatile pest control active ingredient, fragrance, natural essential oil, deodorizer, allergen control ingredient, disinfectant, and sanitizer.
266. The composition of any of embodiments 252-264, wherein the at least one air treatment substance is a pest control active ingredient.
267. The composition of any of embodiments 252-264, wherein the at least one air treatment substance is selected from the group consisting of an organic phosphorous insecticide, natural repellent, citronella oil, natural pyrethrin, pyrethrum extract, and synthetic pyrethroid, or a combination thereof.
268. The composition of any of embodiments 252-264, wherein the at least one air treatment substance is a pyrethroid.
269. The composition of any of embodiments 252-264, wherein the at least one air treatment substance is selected from the group consisting of dimefluthrin, profluthrin, transfluthrin, furamethrin, metofluthrin, allethrin, prallethrin, phenothrin, permethrin, meperfluthrin, momfluorothrin, flumethrin, imiprothrin, and tetramethrin, or a combination thereof.
270. The composition of any of embodiments 252-264, wherein the at least one air treatment substance is selected from the group consisting of transfluthrin, metofluthrin, prallethrin, meperfluthrin, dimefluthrin, and momfluorothrin, or a combination thereof.
271. The composition of any of embodiments 252-264, wherein the at least one air treatment substance is allethrin, metofluthrin, or transfluthrin, or a combination thereof.
272. The composition of any of embodiments 252-271, wherein the concentration of the at least one air treatment substance in the composition is about 0.01% to 75%, wherein such percentage is defied as the amount or mass of the air treatment substance divided by the amount or mass of the matrix.
273. The composition of any of embodiments 252-272, wherein the concentration of the at least one air treatment substance is about 0.03-20%.
274. The composition of any of embodiments 252-272, wherein the concentration of the at least one air treatment substance is about 0.04-10%.
275. The composition of any of embodiments 252-274, wherein the composition comprises a matrix comprising a wax, and wherein the composition comprises about 2mg-2g of the air treatment substance and about 0.5g-50g of the wax.
276. The composition of any of embodiments 252-274, wherein the composition comprises about 10mg -1g of the air treatment substance and about 5g-25g of the wax.
277. A device for dispensing at least one air treatment substance comprising a heat source and the composition of any of embodiments 252-276, wherein the device is configured such that the heat source can apply heat to the composition.
278. The device of embodiment 277, further comprising a top portion and a housing.
280. A pod comprising a container and the composition of embodiment 252 disposed in the container.
281. The pod of embodiment 280, wherein the composition further comprises at least one additive.

## Claims

1. A device for dispensing at least one air treatment substance comprising a top portion (1) and a housing (3), wherein the housing (3) comprises:
a base (11), and
at least one side portion (12),
wherein the at least one side portion (12) is disposed between the base (11) and the top portion (1), and wherein the device has an interior space that is at least partially enclosed by the housing (3);
wherein the housing (3) is configured to receive a heat source (2) on or above a top surface of the base (11) of the housing;
wherein the device further comprises a holder (7) that is configured to receive a composition comprising at least one air treatment substance (4b); and
wherein the device is further configured to receive the heat source (2) and the composition (4b) such that the heat source (2) can apply heat to the composition (4b).

2. A device for dispensing at least one air treatment substance comprising a top portion (1) and a housing (3), wherein the housing (3) comprises at least one side portion (12),
wherein the at least one side portion (12) is disposed between an exterior surface and the top portion (1) when the device is placed on the exterior surface, and wherein the device has an interior space that is at least partially enclosed by the housing (3);
wherein the device further comprises a holder (7) that is configured to receive a composition comprising at least one air treatment substance (4b); and
wherein the device is further configured to receive the composition (4b) such that a heat source (2) placed on the exterior surface can apply heat to the composition (4b).

3. The device of any of claims 1-2, wherein the top portion (1) is fixed or removable from the housing (3) and is situated to block or inhibit a vertical flow of the at least one air treatment substance from the composition (4b) received by the holder (7) when the composition (4b) is heated.

4. The device of any of claims 1-3, further comprising at least one side opening (5) in the top portion (1) and/or the at least one side portions (12) that allows or directs a lateral or horizontal flow of the at least one air treatment substance through the at least one side opening (5).

5. The device of any of claims 1-4, wherein the holder (7) is located between the top portion (1) and the base of the housing (11) or exterior surface and comprises an aperture or recess (21) shaped to receive and hold a pod (4) comprising a container (4a) and the composition disposed in the container (4b).

6. The device of any of claims 1-5, further comprising a second holder (13) configured to receive the heat source (2), and is located between the first holder (7) and the base (11) or above the exterior surface.

7. The device of any of claims 1-6, wherein the device is configured to receive the heat source (2) and the composition (4b) such that the heat source (2) applies a sufficient amount of heat to the composition (4b) to produce a desired release rate of the air treatment substance.

8. The device of any of claims 1-7 further comprising the heat source (2), wherein the heat source (2) comprises a candle with optionally at least one additive disposed in a container comprising 100-150g wax, and can heat the composition comprising at least one air treatment substance to a temperature of about 140-220°C.

9. The device of any of claims 5-8, wherein the holder (7) holds the pod (4) comprising the container (4a) and the composition disposed in the container (4b),
wherein the composition (4b) comprises the at least one air treatment substance, a matrix, and optionally at least one additive, and
wherein the matrix comprises an inert solid substance, and wherein the matrix is optionally immiscible with the at least one air treatment substance which partially or fully melts above 50°C.

10. The device of claim 9, wherein the matrix is wax and the at least one air treatment substance is at a concentration of about 0.03-20%, wherein such percentage is defined as the amount or mass of the air treatment substance divided by the amount or mass of the matrix, and the at least one air treatment substance is selected from the group consisting of volatile pest control active ingredient, fragrance, natural essential oil, deodorizer, allergen control ingredient, disinfectant, and sanitizer.

11. The device of any of claims 1-10, wherein the at least one air treatment substance is selected from the group consisting of dimefluthrin, profluthrin, transfluthrin, furamethrin, metofluthrin, allethrin, prallethrin, phenothrin, permethrin, meperfluthrin, momfluorothrin, flumethrin, imiprothrin, and tetramethrin, or combination thereof.

12. The device of any of claims 1-11, wherein the composition (4b) comprises about 10mg - 1g of the air treatment substance and about 5g-25g of the wax.

13. The device of any of claims 1-12, further comprising a fan (10), wherein the fan (10) increases the amount of the at least one air treatment substance to flow through the at least one side opening (5) of the device.

14. Use of the device according to any of claims 1-13 to repel and/or kill a pest in an indoor or outdoor area.

15. A method for releasing at least one air treatment substance comprising:
(a) placing a heat source in an interior space of a device, the device comprising a top portion and a housing, wherein the housing comprises at least one side portion, wherein the at least one side portion is disposed between the top portion and a base or external surface when the device is placed upright on the exterior surface, wherein the interior space of the device is at least partially enclosed by the housing, wherein the device further comprises a holder that is configured to receive a composition comprising the at least one air treatment substance, and wherein the device is further configured to receive the heat source and the composition such that the heat source can apply heat to the composition;
(b) placing a pod in the holder of the device, the pod comprising a pod container and a composition disposed in the container, wherein the composition comprises the at least one air treatment substance; and
(c) heating the composition comprising a matrix and the at least one air treatment substance with heat from the heat source to cause a release of the at least one air treatment substance into the surrounding air.
